## Europäisches Patentamt
## European Patent Office
## Office européen des brevets

(11) Publication number: **0 163 882**
**B1**

# EUROPEAN PATENT SPECIFICATION

(45) Date of publication of patent specification: **10.05.89**

(51) Int. Cl.⁴: **G 06 F 3/06,** G 06 F 13/40

(21) Application number: **85104748.0**

(22) Date of filing: **05.10.82**

(60) Publication number of the earlier application in accordance with Art. 76 EPC: **0 077 007**

(54) **Method and apparatus to determine the paths between Mass Storage Devices and Controllers.**

(30) Priority: **05.10.81 US 308593**

(43) Date of publication of application:
**11.12.85 Bulletin 85/50**

(45) Publication of the grant of the patent:
**10.05.89 Bulletin 89/19**

(84) Designated Contracting States:
**BE DE FR GB IT NL SE**

(56) References cited:
**GB-A-2 020 456**
**US-A-4 007 448**

**PATENTS ABSTRACTS OF JAPAN, vol. 4, no. 172 (P-38)654r, 27th November 1980; & JP - A - 55 116 156 (TOKYO SHIBAURA DENKI K.K.) 06-09-1980**

**JAPAN TELECOMMUNICATIONS REVIEW, vol. 22, no. 1, January 1980, pages 67-70, Tokyo, JP; Y. ITO et al.: "800 MB/spindle magnetic disk storage system"**

(73) Proprietor: **DIGITAL EQUIPMENT CORPORATION**
**111 Powdermill Road**
**Maynard Massachusetts 01754-1418 (US)**

(72) Inventor: **Rubinson, Barry L.**
**585 Anaconda Drive**
**Colorado Springs Colorado 80919 (US)**
Inventor: **Bean, Robert G.**
**7420 Wynwood Terrace**
**Colorado Springs Colorado 80919 (US)**
Inventor: **Gardner, Edward A.**
**1262 Hofstead Terrace**
**Colorado Springs Colorado 80907 (US)**

(74) Representative: **Betten, Jürgen, Dipl.-Ing. et al**
**Patentanwälte Betten & Resch**
**Reichenbachstrasse 19**
**D-8000 München 5 (DE)**

EP 0 163 882 B1

## Description

### Cross reference to related applications

This application relates to a data processing system, other aspects of which are described in the following commonly assigned applications filed on even date herewith, the disclosures of which may conveniently be referred to, to clarify the environment of the present invention:

US—A—4 449 182, titled Interface Between a Pair of Processors, Such as Host and Peripheral-Controlling Processors in Data Processing Systems and US—A—4 434 487, titled Disk Format for Secondary Storage System.

### Field of the invention

This invention relates generally to data processing systems and, more specifically, to secondary (or mass) storage facilities utilized for storing data in such systems. In particular, it relates to a method for permitting the host of a data processing system to determine all possible accessing paths between a plurality of mass storage devices and a plurality of controllers. More specifically, it relates to a method and apparatus for permitting a controller to interrogate a mass storage device. It also relates to a method for permitting determination of the topology of a data processing system.

### Background of the invention

Secondary storage facilities used in data processing systems generally comprise a storage device controller and one or more drives connected to the controller. The drives include, but are not limited to, direct access memory devices, such as magnetic disk and magnetic bubble memories.

The secondary storage facilities, especially those facilities using magnetic disk memory devices as the drives, have become very sophisticated in recent years. However, in efforts to increase performance, interconnections between controllers and drives have increased in complexity. One of the more significant results of such increased complexity is that controllers are adapted to be used only with certain drives, and vice-versa. This is a result largely of the communications employed between a controller and a drive. Thus, as new drives are developed, it is generally necessary also to develop new controllers for use with them.

Cabling and connector costs also have become significant, since high reliability is needed and information must be transmitted at high rates. Such costs in turn, are directly related to the number of conductors needed in the cable; each conductor requires at least a receiver and/or transmitter for the termination at both the controller and drive ends of the cable.

Further, multiple controllers and/or drives frequently are interconnected via a time-shared communications channel, termed a bus. By virtue of the nature of the time-sharing arrangement, an individual controller generally can communicate with only one drive at a time.

From GB—A—2 020 456 which corresponds to US—A—4 207 609 is known a method and data processing system for the path independent reservation of mass storage devices to CPUs through controllers. For each individual transfer of commands or data from a controller to a mass storage device a path, that is not in use, between the mass storage device and the CPU is allocated dynamically.

Thus a great expenditure is necessary for the interconnection between the mass storage devices and the controllers.

Therefore it is an object of this invention to provide an efficient interconnection between the mass storage devices and the controllers connected thereto wherein all host-controllers-drive paths may be determined automatically.

Another object of the invention is to provide an interconnection between controllers and drives wherein the complexity and costs of interconnecting a drive with its controller are reduced and which enables a controller to communicate concurrently with multiple drives.

Yet another object of this invention is to provide a flexible architecture in the storage system interconnection.

### Summary of the invention

According to a preferred embodiment of the invention the method for permitting the host of a data processing system to determine all possible accessing paths between a plurality of mass storage devices and a plurality of controllers comprises the features according to claim 1.

According to a further embodiment of the invention the method for permitting a controller to interrogate a mass storage device comprises the features of claim 4.

According to a further embodiment of the invention the method of permitting the determination of the topology of a data processing system comprises the features according to claim 8.

According to a further embodiment of the invention the apparatus for permitting a controller to interrogate a mass storage device comprises the features of claim 12.

Thus the claimed method and apparatus make possible to determine all of the possible host-controller-drive paths in the system and especially to determine alternative controller paths to the on-line interconnection if this is necessary.

In order to distinguish the invention from the above prior art it is important to understand that the present invention permits the determination of the physical TOPOLOGY of storage systems for the purpose of defining what paths are available should there be a problem with a particular path. Unlike the prior art which relates to a dynamic allocation of a path for an individual transfer of commands or data from controllers to drives the paths of the present invention are statically established by the fact that a drive is on-line to a particular controller. A path established in accordance with the present invention is switched only if there is a path-related failure and an alternate path is needed. Further developments of the embodiments according to the invention are described in claims 2, 3, 5—7, 9—11 and 13—15.

This invention is pointed out with particularity in the appended claims. The above objects, features and advantages of the invention may be better understood by referring to the following detailed description, which should be read in conjunction with the accompanying drawings.

Brief description of the drawing

Fig. 1 is a diagrammatic illustration of the control-drive communications channels in a bus used in the present invention;

Fig. 2 is a table summarizing the overall nature of information on the bus 10 of Fig. 1, as a function of drive state relative to controller;

Fig. 3 is an illustration of the format of the RTCS signal on line 18 of Fig. 1;

Fig. 4 is an illustration of the format of the RTDS signal on line 12 of Fig. 1;

Fig. 5 is a state diagram showing drive states relative to controller, and state changes;

Fig. 6 is a diagrammatic illustration of drive command timer operation;

Fig. 7 is an illustration of the format for a Level 0 (i.e., lowest protocol level) control transmission used in the present invention;

Figs. 8A—8I are diagrammatic illustrations of the format for each possible Level 1 (i.e., intermediate protocol level) frame transmitted on bus 10;

Fig. 9 is a flow chart of the controller's actions for a Level 1 transmission;

Figs. 10A—10C are flow charts of the drive's Level 1 receive process;

Fig. 11 is a flow chart of the drive's Level 1 transmitting process;

Fig. 12 is a flow chart for the controller's Level 1 reception process;

Fig. 13 is a diagrammatic illustration of the format of a Level 2 (i.e., highest protocol level) message;

Fig. 14 is a flow chart illustrating a method for performing Level 2 command processing at the controller;

Fig. 15 is a flow chart for the drive and the controller Level 2 message transmission process;

Fig. 16 is a flow chart showing the drive's Level 2 message reception process;

Fig. 17 is a flow chart illustrating the controller's Level 2 message reception process;

Fig. 18 is a flow chart illustrating the controller's processing of the so-called CHANGE MODE command described below;

Fig. 19 is a flow chart illustrating the drive's processing of the CHANGE MODE command;

Fig. 20 is a diagrammatic illustration of the format of the CHANGE MODE command;

Fig. 21 is a flow chart illustrating the controller's processing of the so-called CHANGE CONTROLLER FLAGS command described below;

Fig. 22 is a flow chart illustrating the drive's processing of the CHANGE CONTROLLER FLAGS command;

Fig. 23 is an illustration of the format of the CHANGE CONTROLLER FLAGS command;

Fig. 24 is a flow chart of the processing of the so-called DISCONNECT command by the controller, as described below;

Fig. 25 is a flow chart of the processing of the DISCONNECT command by the drive:

Fig. 26 is an illustration of the format of the DISCONNECT command;

Fig. 27 is a flow chart of the controller's processing of the so-called ERROR RECOVERY command, described below;

Fig. 28 is a flow chart of the drive's processing of the ERROR RECOVERY command;

Fig. 29 is an illustration of the format of the ERROR RECOVERY command;

Fig. 30 is an illustration of the format of the so-called GET COMMON CHARACTERISTICS command, described below;

Fig. 31 is a flow chart of the controller's processing of the GET COMMON CHARACTERISTICS command;

Fig. 32 is a flow chart of the drive's processing of the GET COMMON CHARACTERISTICS command;

Fig. 33 is an illustration of the format of the GET COMMON CHARACTERISTICS response;

Fig. 34 is an illustration of the format of the so-called GET SUBUNIT CHARACTERISTICS command, described below;

Fig. 35 is a flow chart of the controller's processing of the GET SUBUNIT CHARACTERISTICS command;

Fig. 36 is a flow chart of the drive's processing of the GET SUBUNIT CHARACTERISTICS command;

Figs. 37A and 37B, together, are an illustration of the format of the GET SUBUNIT CHARACTERISTICS response;

Fig. 38 is an illustration of the format of the so-called GET STATUS command, described below;

Fig. 39 is a flow chart of the controller's processing of the GET STATUS command;

Fig. 40 is a flow chart of the drive's processing of the GET STATUS command;

Fig. 41 is an illustration of the format of the response to the GET STATUS command;

Fig. 42 is an illustration of the format of the so-called ONLINE command, described below;

Fig. 43 is a flow chart of the controller's processing of the ONLINE command;

Fig. 44 is a flow chart of the drive's processing of the ONLINE command;

Fig. 45 is an illustration of the format of the so-called TOPOLGY command, described below according to the present invention;

Fig. 46 is a flow chart of the controller's processing of the TOPOLOGY command according to the present invention;

Fig 47 is a flow chart of the drive's processing of the TOPOLOGY command according to the present invention;

Fig. 48 is an illustration of the format of the response to a TOPOLOGY command according to the present invention;

Fig. 49 is an illustration of the format of the generic COMPLETED response; and

Fig. 50 is an illustration of the format of the generic UNSUCCESSFUL response.

Description of an illustrative embodiment
Overview

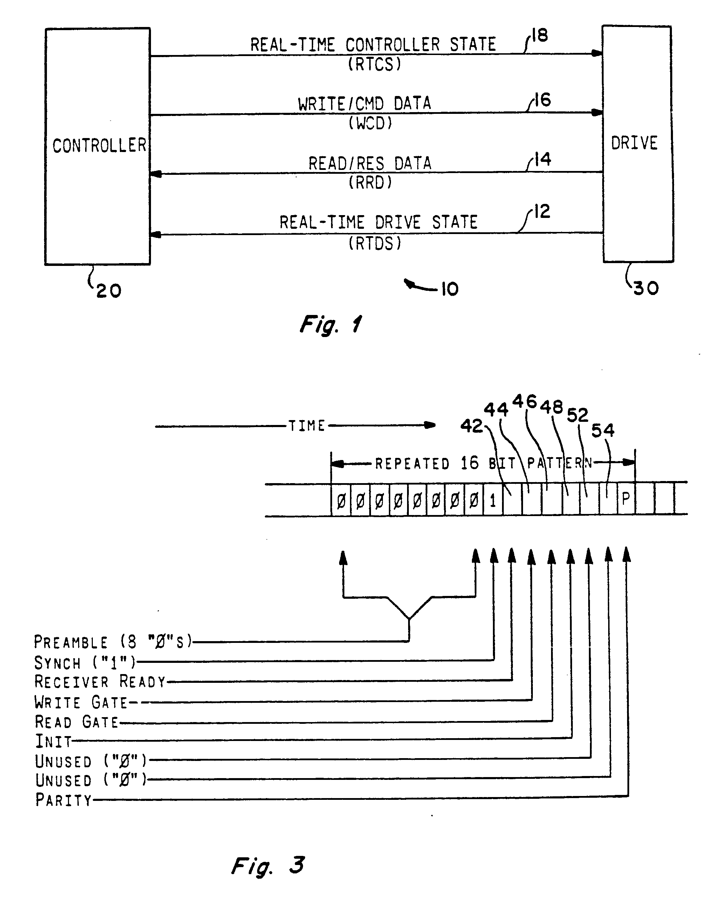

Referring now to Fig. 1, there is shown a diagrammatic illustration of the physical cable channels and their meanings. The cable (or bus), indicated generally at 10, consists of four lines, R.14, 16 and 18, which are used to transmit ten logical signals between a controller 20 and a drive 30. All four bus lines are unidirectional, highspeed bit-serial channels. On lines 12 and 18 state signals are transmitted. Serialized real-time and serialized drive control protocol messages and data are transmitted on lines 14 and 16. The state signals on lines 12 and 18 are sent repetitively. Line 12 carries real-time drive state (RTDS) signals from the drive 30 to the controller 20, for use in coordinating and synchronizing transmissions and for notification of significant state changes. Line 14 carries read data and response data (RRD) messages from drive to controller. Line 16 carries write data and command data (WCD) messages from controller to drive. Line 18 carries real-time controller state (RTCS) signals from controller to drive, for use in coordinating and synchronizing transmissions and for notification of significant state changes.

Preferably, the information transmitted overall all four channels is encoded in accordance with US—A—4 475 212 (EP—A—74 587) titled Frequency-Independent, Self-Clocking Encoding Technique and Apparatus for Digital Communications. Other encoding schemes may be employed, so long as a self-clocking code is used; there is no provision for a separate clock signal to be transmitted.

Logical signals are provided to convey directly to the controller the sector and index pulses from each drive. This provides the controllers with the necessary information to keep track, in real time, of disk rotational position.

As stated above, messages are transmitted between controller and drive by means of a drive control protocol having three layers. Each layer has an interface to the layer(s) above and/or below it, and each has syntactically and semantically defined rules used for communicating over the cable. The lower layers can be implemented in hardware or software. The lowest level, "Level 0", governs the electrical transmission of the messages along the cable. "Level 1" provides the mechanism by which individual messages are framed (i.e., their beginning and end is identified and transmission errors detected) and by which data operations take place. "Level 2" is the level at which command/response exchanges take place.

At the two lower levels, the control protocol is the same for commands and responses; that is, it is symmetrical. For example, commands and responses are of different content and length, but the identification of the start and end of the message and the location of the checksum is the same in both cases. The "Level 2" protocol, however, involving commands and responses, requires an asymmetrical interpretation.

The Level 2 protocol imposes a strict master/slave relationship on communications between the controller and the drive. The controller is the master and is responsive for initiating all exchanges; the drive is the slave and its activity is limited largely to completing exchanges by giving appropriate responses. It also notifies the controller of important changes in its status, via an Attention mechanism.

The Level 2 protocol is synchronous. Each Level 2 command to a drive results in a single response from the drive when that command has been executed. The nature of the response indicates the successful or unsuccessful interpretation and execution of the command. This response uniquely specifies the point at which the drive is ready for another command; it also guarantees that commands are processed in their proper order because, by convention, a new command is not sent by the controller until the response for the previous command is received and validated, and all errors resulting from that command have been resolved.

Although it is completely synchronous, the protocol employs an ATTENTION signal as a means for the drive to notify the controller asynchronously that an important error condition or change in status has occurred and requires handling. The controller then deals with the condition by initiating the synchronous exchanges necessary to determine and resolve the condition at a time when both drive and controller are in known, controlled states.

The protocol supports variable length, multiple byte messages. Each message is bounded by a unique beginning and termination; message length is implicit rather than explicit.

Definitions

It will be helpful, before proceeding, to define certain additional terminology which will be used herein.

"Write data" refers to data to be recorded onto a drive. "Read data" refers to data to be retrieved from the drive.

A "sync character" is a twelve-bit binary pattern which identifies the start of meaningful data coming across the serial data lines. The exemplary pattern used herein is 111101011001 (serialized left to right). It is preceded on the line by an undefined number of leading zeros and is followed immediately by two zeros which are then followed by the first bit of meaningful information. Further explanation of this sync character are provided in commonly-assigned co-pending U.S. application serial No. 06/274,420, titled Circuit for Serializing and Deserializing Digital Data, filed June 17, 1981 by Lih-Jyh Weng et al, the disclosure of which is hereby incorporated by reference herein.

The sync pattern is an autocorrelation pattern; the requirement for a "match" between the sync pattern and the received pattern is that any nine out of the twelve received bits match their counterparts in the sync pattern. The sync pattern is recorded on the disk, preceding the headers and data of each sector, and thus must be recognized by the controller even though up to three bits are in error when it is coming from the disk. However, when the sync character is being used as a communications sync character on the interconnection bus, the controller has the option of requiring an exact match.

"Attention condition" is a term used to indicate that a status change in an online drive has occurred which is significant enough to warrant controller interaction.

A "multi-unit drive" is a single drive attached to a controller via a single interconnection cable, which has media divided into multiple independent subunits, each subunit representing a distinct logical unit to the host.

A "sector" is the smallest unit by which data is addressed physically. Each sector occupies a specific physical position relative to an index location on a disk, and has the property that it is available for reading or writing once per disk rotation.

Sectors are grouped together hierarchically for addressing purposes. First, a disk surface is divided into one or more "cylinders". In turn, cylinders are divided into "groups"; and groups are divided into tracks.

A "Track" refers to a logical entity representing a set of sectors occupying contiguous logical disk locations.

A "group" is, in turn, a logical entity representing a set of tracks such that individual tracks in a group can be selected within the intersector rotation time. Tracks in the same group are "aligned" such that the same physical sector address is available for reading or writing simultaneously on all tracks in the group.

A "cylinder" is a logical entity representing a collection of groups which can be selected via an operation with latencies less than the minimum "seek" time.

Note that by these definitions, the terms track, group and cylinder are independent of physical organization or construction of the drive. They simply relate sectors to each other as a function of access characteristics.

The "sector number" portion of a physical sector address is always the low order portion. The "track number" portion of a specific sector physical address is always the middle portion of that address between group and sector. The "group number" portion of a specific sector physical address is always the middle portion of that address, between cylinder and track.

The "cylinder number" portion of a specific sector physical address is always the highest order portion of that address.

A "frame" is a sixteen-bit quantity comprising the smallest unit of control information passed between the controller and the drive by the interface hardware. Every frame is conceptually partitioned into two eight-bit bytes.

A "control frame" is a set of sequentially transmitted frames starting with a "start frame" and terminating with an "end frame". Its contents comprise a message that conveys information between the controller and drive. A "command" is a control message from the controller to the drive; a "response" is a control message sent from the drive to the controller. An "exchange" is a pair of control messages, the first one being the command issued by the controller and the second one being the response sent by the drive.

The "command timer" and "response timer" are mechanisms in the drive and controller, respectively, used to monitor subsystem activity. They serve to sustain the minimum subsystem activity necessary to assure that the drive and controller are both still active, and signal when the minimum activity is not sustained in either the controller or drive, so that one must be considered "inoperative".

"Drive-offline" is one of the drive's states relative to the controller. When in the "drive-offline" state, the drive is not operational and may not communicate with the controller via the drive control protocol.

"Drive-unavailable" is another of the drive's states relative to the controller. In this state, the drive is operating, is visible to, and may at times communicate with the controller; but the controller may not fully utilize the drive because the drive is "drive-online" to another controller.

"Drive-available" is another of the drive's states relative to the controller. In this state, the drive is visible to, capable of communicating with, and capable of becoming "drive-online" to a controller, but is not currently "drive-online" to any specific controller.

"Drive-online" is another of the drive's possible states relative to the controller. In this state, a drive is dedicated to the exclusive use of a particular controller and is not available to any alternate controller.

"Generic status" is a subset of the status information maintained by the drive that is independent of drive type. It provides the basic information necessary for normal drive operation.

The "request byte" is one of the status bytes in the generic status. It is used to signal requests from the drive for controller action.

The "error byte" is another one of the status bytes in the generic status. It is used to signal error conditions that prevent normal drive operation.

The "mode byte" is still another status byte in the generic status and is used to store the current state of those drive operating modes that are alterable by the controller.

The cable signals

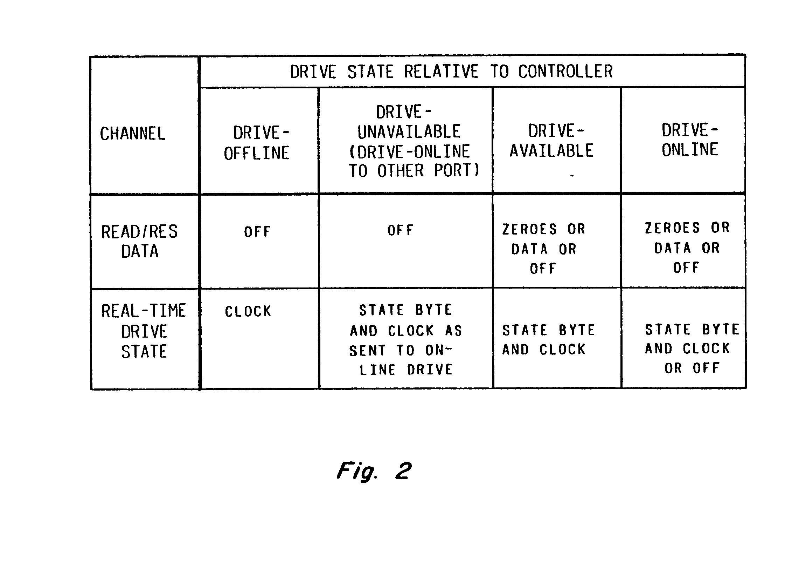

The table in Fig. 2 summarizes the overall nature of information on each of the four lines in a bus 10 carrying information from a given drive to a given controller, as a function of drive state relative to that controller.

Several comments will help to clarify and explain Fig. 2. First, the designation "off" means that no transitions exist. Second, data on RRD line 14, in the "drive-available" state, is sent only to the commanding port if there are multiple ports. Third, in the "drive-unavailable" state the drive is not listening to the controller's state. Fourth, "clock" in the "drive-offline" state means that the drive transmits a state clock but no state bytes. Fifth, the RTDS line 12 will be "off" (i.e., convey no transitions) while a drive is initializing or is broken or its port is disconnected. Sixth, in the "driveonline" state, the RTDS channel will be "off" during execution of the TOPOLOGY command (discussed below). Further, seventh, during drive execution of a TOPOLOGY command, lines to a "drive-unavailable" drive will temporarily take on characteristics identical to those for "drive-available" drives.

The RTDS signal on line 12 is used to transmit six logical signals from drive to controller. These are needed to synchronize controller/drive operations. It is a single byte preceded by a "zero" byte. This two byte pattern is sent continuously by drives to all controllers for which the drive port switches are enabled. The RRD signal on line 14 transmits self-clocked digital data from the drive to the controller, LSB first. Two types of information are sent over the RRD line: (1) the read data that is being retrieved from the disk surface; and (2) response messages from the drive to the controller.

The WCS signal on line 16 transmits self-clocked digital data from the controller to the drive, LSB first. Three types of information are sent over the WCD line: (1) write data to be recorded onto the disk surface; (2) command messages from the controller to the drive; and (3) real-time data transfer commands.

The RTCS signal on line 10 communicates four logical signals used for synchronizing controller/drive operations. The RTCS signal is a pattern of a single byte preceded by a "zero" byte. This two-byte pattern must be sent repeatedly any time the drive is selected by the controller. A controller may send the pattern continuously for a "drive-online" drive or may transmit it only when the drive is selected. It is the responsibility of the drive to maintain the last "state" received and assume that this state is valid until an update is received.

When switching its state transmission activity between drives, the controller must complete a state word to the current drive and begin with a complete word (including preamble) to the new drive. Due to possible skew in synchronizing, state bits cannot be encoded—i.e., they must be able to change validly independently of each other.

Synchronization detection is accomplished by sensing at least seven zeros followed by a one.

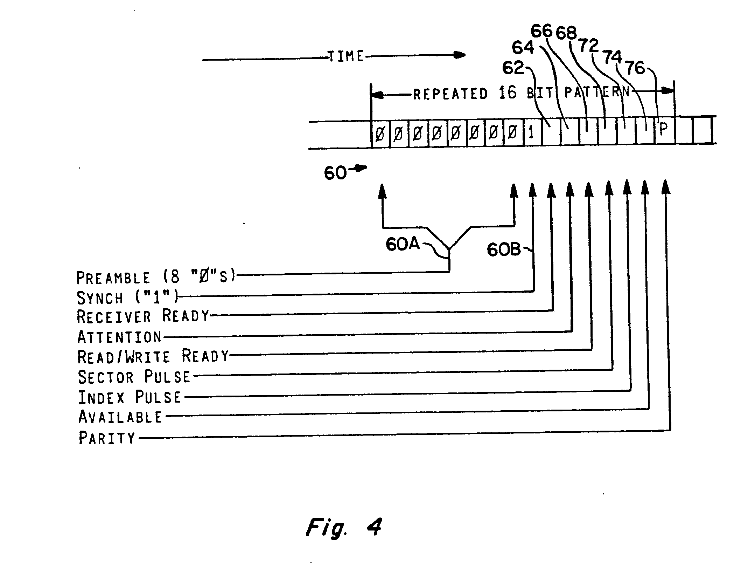

Fig. 3 illustrates the RTCS signal and defines the position and significance of each of its bits Bit 42, the first bit following the end of the sync pattern, provides the RECEIVER READY SIGNALS. (There are two RECEIVER READY signals, one from the controller to the drive and one from the drive to the controller; both are logical signals, the assertion of which is used to indicate that the issuing party is in command mode and is ready to receive a message frame).

Bit 44 contains the INIT signal, which is a logical signal from the controller to the drive, used as a drive initialization signal; the standard sequence used by the controller to initialize the drive is to assert the INIT bit. Each time a controller is powered up or reinitialized by the host or by operation command, it will generate an INIT signal to all drives to which it may connect. This is used to synchronize those drives that are waiting for the controller to become active, and will have no effect on drives "drive-online" to another controller.

The leading edge of the INIT signal instructs the drive to take the following actions:

(1) place its microprocessor in a known location and context;

(2) abort all operations in context, including any data transfers, and bring all mechanical movements to a controlled stop, if possible;

(3) within a predefined interval after the controller's assertion of the INIT signal, stop all transitions on both the RRD and RTDS lines for a defined interval;

(4) save its generic and extended status at the time it was interrupted (see below);

(5) execute a reinitialization sequence and perhaps certain minimum integrity diagnostics; and

(6) upon completion of the reinitialization sequence, load the "DF" status bit, update other generic and extended status to appropriate current values, return to the drives's previous state relative to all controllers and assert ATTENTION and/or AVAILABLE. Finally, the drive asserts RECEIVER READY to signal completion of the initialization sequence.

Bit position 46 conveys a "READ GATE" signal, which is a logical signal transmitted from the controller to the drive. During a read data operation, READ GATE is asserted after the header splice and before the beginning of the data field preamble, and remains asserted until after the last bit has been read. The trailing edge of READ GATE indicates to the drive that the current data transfer command is finished.

Bit 44 contains a WRITE GATE signal, which is a logical signal transmitted from controller to drive. The trailing edge of the WRITE GATE signal indicates to the drive that the current data transfer command is finished.

The RTDS frame format is indicated in Fig. 4. As shown there, the frame 60 comprises a preamble 60A of eight 0's followed by a sync bit 60B, which is a 1, six information bits 62—74 and a parity bit 76.

Bit 62 is a RECEIVER READY signal, which is a logical signal whose assertion is used to indicate that the drive is in command mode and is ready to receive a command frame.

Bit 64 is an ATTENTION signal, which is a logical signal from the drive used to notify the controller that a potentially significant status change has occurred in the drive. If it is appropriate for a "drive-online" drive to assert ATTENTION, the signal is asserted regardless of whether a command is in progress or not. The drive continues to assert this signal until it receives a valid GET STATUS command from the controller; it will then lower the signal immediately after receipt of the end frame.

Bit 66 conveys a READ/WRITE READY signal, which is a logical signal from the drive to the controller signifying, when asserted, that the drive is capable of handling a data transfer to or from the disk surface.

Bit 68 conveys a SECTOR PULSE signal. This is a logical signal from the drive to the controller signalling that the head is at the boundary of one of the sectors into which the disk is divided. The controller uses the leading edge of the SECTOR PULSE signal for rotational position sensing, and the trailing edge as the beginning of the sector. The SECTOR PULSE signal must be at least 32 state bit transmission times in duration for the exemplary embodiment illustrated herein.

Bit position 72 transmits an INDEX PULSE—i.e., a logical signal from the drive to the controller asserted once every revolution. Like the SECTOR PULSE signal, the INDEX PULSE signal must last for at least 32 state bit transmission times. The controller uses the leading edge of the INDEX PULSE signal for rotational position sensing and the trailing edge to mark the beginning of sector number 0.

Bit position 74 contains an "Available" bit, which is a logical signal from the drive to the controller indicating that the drive is in the "drive-available" state. It is asserted whenever the drive enters the "drive-available" state, remains asserted as long as the drive remains in that state, and is lowered when the drive leaves that state.

Drive control protocol

The following general rules govern the drive control protocol.

First, only one command or operation can be outstanding on a drive. The controller cannot initiate another command or operation until the response to the current one is received.

Second, all commands from the controller to the drive initiate an exchange. After issuing a command, the controller sets its response timer and enters a state where it is waiting for the response to that command. If the response timer expires, the controller will assume that the message was not received. Third, some Level 2 commands may result in a drive operation that extends beyond the completion of the exchange. In this case, the completion of the drive operation is signalled in one of two ways: (1) the raising of the READ/WRITE READY signal indicates successful completion and (2) the reporting of error information via the Attention mechanism signals unsuccessful completion. For this command, the controller is obliged to time-out on the entire operation as well as the response itself. For all other commands, completion of the exchange signals completion of the operation as well.

Fourth, the drive may not transmit a message to the controller except in response to a command. This is enforced by the controller as it refuses to assert RECEIVER/READY unless it is specifically awaiting a response.

Drives states relative to the controller

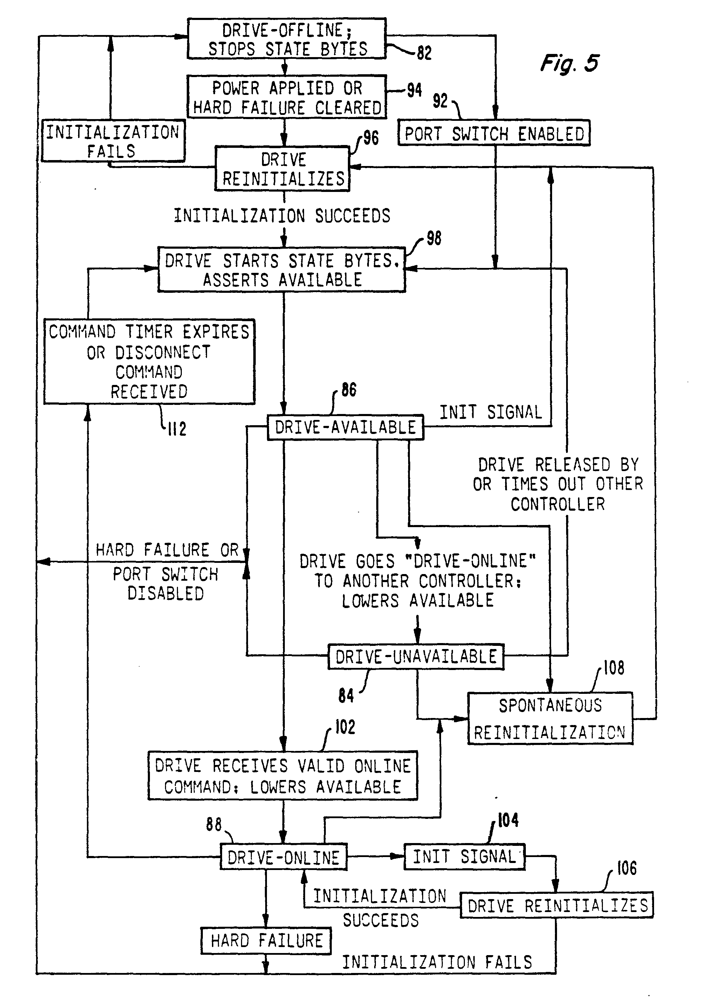

The drive may be in any one of four states relative to the controller. These states differ in the manner in which the drive "listens" to commands and INIT signals through its port to the controller, the manner in which it deals its panel switches and the extent of controller visibility into and control over drive operation. Referring now to Fig. 5, the description of the drive states and how they are left and entered follows. There are four possible drive control states, designated "drive-offline" (state 82), "drive-unavailable" (state 84), "drive-available" (state 86), and "drive-online" (state 88).

The "drive-offline" state is a state where the controller is not able to communicate with the drive at Level 1 or Level 2. There may or may not be state information transmitted from the drive. A drive enters the "drive-offline" state relative to a particular controller whenever (1) the drive forces itself "drive-offline" due to some catastrophic failure, (2) the drive becomes unavailable to the controller because of a change in the port selection switches, (3) the unit select mechanism is removed, the drive fault display mechanism is activated, or (4) drive power fails.

Assume that a drive is in the "drive-offline" state 82. It may leave that state relative to a particular controller when the port switch or unit select mechanism is enabled, step 92, or when power is applied or a hard failure is cleared, step 94. The clearing of a hard failure or application of power leads to the reinitialization of the drive, step 96. The enabling of the port switch or unit select mechanism causes the drive to start its state bytes and assert AVAILABLE, step 98. This also occurs if the initialization is successful following step 96. Upon assertion of AVAILABLE, the drive enters state 86, "drive-available".

A drive that is in the "drive-unavailable" state is one that is visible to the controller, can at times communicate with the controller, but cannot be fully utilized by the controller because it is "drive-online" to another controller. When a "drive-unavailable" drive is unable to communicate at all with the controller, it transmits its state signals to the controller but does not respond to the controller state signals and does not supply any clock for the data lines.

A drive enters the "drive-unavailable" state relative to all controllers other than the one to which it is "drive-online" whenever it enters the "drive-online" state. A drive leaves the "drive-unavailable" state relative to all controllers other than the one to which it is "drive-online" whenever it leaves the "drive-online" state. As shown in Fig. 5, to reach the "drive-online" state 86, the drive must first be in the "drive-available" 86 and then receives a valid UNLINE command; at this point it lower AVAILABLE. That is step 102. Once in the "drive-online" state 86, that state can be reentered in response to an INIT signal, step 104 and a successful drive reinitialization, step 106. Unsuccessful initialization causes reversion to the "drive-offline" state 82. A hard failure, step 108, also causes the state to change from "drive-online" to "drive-offline".

Two further possibilities can take the drive out of the "drive-online" state. First, spontaneous reinitialization, step 108, causes reversion to step 96, which initiates the intialization procedure. Second, expiration of the command timer or receipt on a DISCONNECT command, step 112, causes reversion to step 98.

A drive in the "drive available" state 86 has no evidence that it is not capable of communicating. A "drive available" multi-ported drive "listens" to and honors the INIT signal from any port, and also "listens" for a command from any port. A drive in the "drive-available" state may or may not have a disk present, spinning, and heads loaded. While in the "drive-available" state, the drive responds locally to changes in the drive switch settings and does not report Attention conditions to the controller, but does use the ATTENTION signal to report drive spin-up capability. A drive enters the "drive-available" state relative to a particular controller when any of the following occurs:

1. It is in the "drive-offline" state and successfully initializes and has no evidence that it cannot communicate with the controller.

2. It is in the "drive-offline" state because the port is disabled by the panel switches, and the port becomes enabled by a switch change.

3. It is in the "drive-online" state and receives a DISCONNECT command from the controller.

4. It is in the "drive-online" state and concludes that the controller is inoperative because its command timer has expired.

5. It is in the "drive-online" state and spontaneously reinitializes due to any condition which causes the loss of context, such as a transient power failure.

A drive leaves the "drive-available" state relative to a particular controller when any of the following occurs:

1. It receives a valid ONLINE command and goes into the "drive-online" state.

2. It is forced into the "drive-offline" state because its power fails, the port is disabled by panel switch changes, or it detects a failure that prevents communication with the controller.

3. It fails to reinitialize successfully in response to an INIT signal and is forced into the "drive-offline" state.

Whenever a drive is in the "drive-available" state, it notifies the controller that it is "drive-available" by asserting the AVAILABLE signal.

While the AVAILABLE signal is being asserted, the drive listens for a command or INIT signal from all enabled controllers. A drive in the "drive-available" state relative to a particular controller is simultaneously in the "drive-available" state to all controllers for which the port switches are enabled. It is "drive-offline" to those controllers for which the port switches are disabled.

A drive in the "drive-online" state is dedicated to the controller to which it is "drive-online" and ignores all controller signals on all other ports. A drive in the "drive-online" state attempts to execute all commands it receives; if it cannot execute a command because its physical status is not appropriate, it responds with an appropriate error code in the status summary section of an UNSUCCESSFUL response.

The receipt of a valid ONLINE command causes the drive to enter the "drive-online" state. Any one of the following will cause a drive to leave the "drive-online" state:

1. The receipt of a DISCONNECT command, which causes the drive to enter the "drive-available" state.

2. The occurrence of a power failure or other failure that prevents further communications, which will force the drive into the "drive-offline" state.

3. Failure to successfully reinitialize in response to an INIT signal, which will force the drive into the "drive-offline" state.

4. The expiration of the command timer, which forces it to conclude that the controller is inoperative and must return to the "drive-available" state.

5. Spontaneous reinitialization due to a condition which causes loss of context.

A drive in the "drive-online" state relative to a particular controller is simultaneously in the "drive-unavailable" state to all other enabled controllers. A drive in the "drive-online" state does not alter its status in response to changes in the switch settings. Rather, when a drive detects such a switch change, it uses the Attention mechanism to report it to the controller. The controller determines how the drive will respond. The controller will either issue a direct command to effect the status change, or will issue a DISCONNECT command to make the drive enter the "drive-available" state, where it can effect the status change locally. Although the slight time delay is usually not noticeable to the operator who actuated the switch, the controller will delay action on the switch setting change until it has completed all preceding operations to the drive.

Use of Attention signal

A "drive-online" drive uses the ATTENTION signal in four ways:

1. A drive triggers the attention sequence by asserting the ATTENTION signal whenever the command timer expires or one of the generic status bits changes, except when such change is due to the correct operation of a Level 2 command or an error therein. In response to the ATTENTION signal, the controller initiates a GET STATUS exchange, to determine the drive's new status. By comparing the new status information obtained with previous status information, it determines the nature of the Attention condition. The controller eventually resolves those Attention conditions which require further action by initiating the appropriate exchanges at some later time.

2. Between the time that a drive asserts the ATTENTION signal and the subsequent issuance of a valid GET STATUS command by the controller, the drive considers the controller notified and continues to execute the currant command (if any) as best as possible. Further status changes occurring in the drive before the status interrogation arrives are all reflected in the response to the next valid status interrogation command.

3. Upon receipt of a valid GET STATUS command following the assertion of the ATTENTION signal by the drive, the drive lower the ATTENTION signal and responds with the appropriate response supplying the details of its current status. The ATTENTION signal must be lowered by the drive immediately after the status interrogation command is received and validated, and before the command is processed and a response made. This avoids a condition where a status change occurs during the processing of the current status interrogation and goes undetected.

4. The controller attempts to act on a pending ATTENTION signal as soon as possible. However, the drive can expect to see other unrelated commands in the interval between the issuance of the ATTENTION and the interrogation of status due to condition. During the pendancy of an unserviced Attention condition, the drive attempts to process all commands normally. If the Attention condition was caused by an error, however, the drive refuses subsequent head motion and data transfer commands until a status interrogation is received and the error condition cleared.

Command and response timers

The controller employs a response timer to time all drive command I/O activity. The time out period is drive specific; it is a parameter peculiar to each disk and is communicated to the controller by the drive. When any frame other than Message Continuation or Message End is ready to be transmitted to the drive, the controller starts the timer and sets its duration according to the specifics of the command and drive. The timer is reset upon receipt of the Message End frame of the response or completion of the data operation. If the timer expires, the controller "assumes" the drive has failed and attempts to resynchronize with it by issuing an INIT signal.

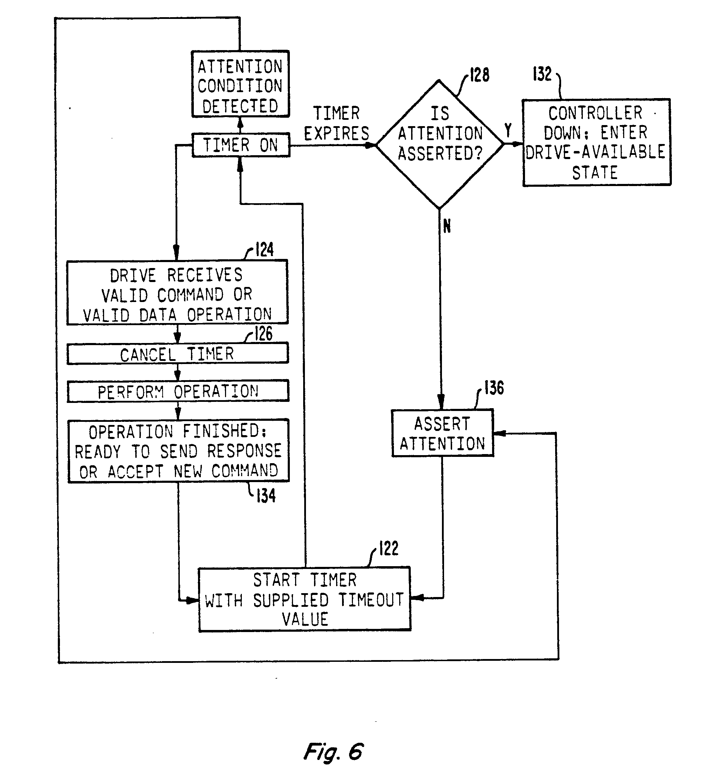

Correspondingly, a drive in the "drive-online" or "drive-available" state times controller activity. The complete drive command timer operation is illustrated in Fig. 6. Whenever a "drive-available" drive receives a Message Start frame, it starts a timer. Step 122. A message End frame from the controller (step 124), causes the timer to be stopped (step 126). If the timer expires while ATTENTION is asserted, (as determined by test step 128) the drive assumes the controller is "inoperative" (step 132). Similarly, a "drive-online" drive starts a time when the drive is ready to (1) initiate transmission of a Message Start frame of a response (step 134), (2) assert the ATTENTION signal (step 126), or (3) complete a data transfer operation. The timer is cancelled when a Message End frame of a command or a data transfer command is received by the drive (step 124).

Level 0

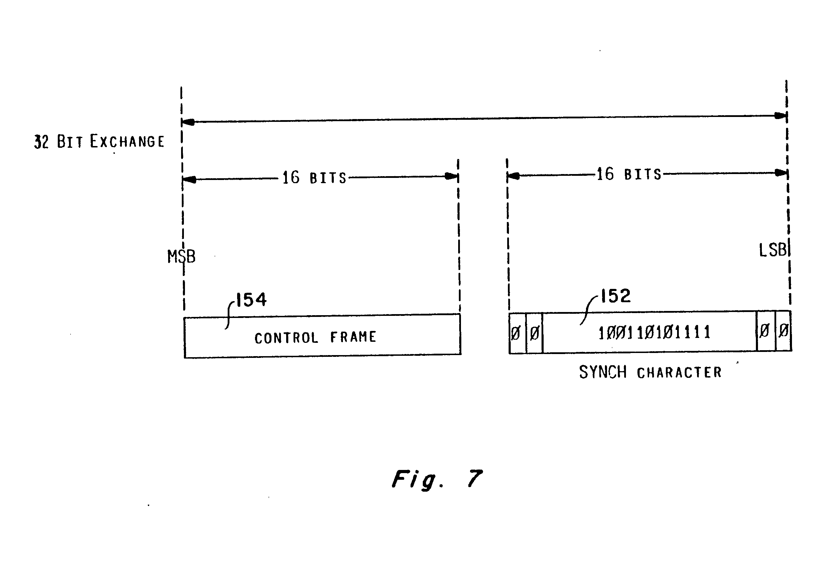

The format for each Level 0 control transmission across the cable 10 is illustrated in Fig. 7. As shown there, such transmissions over the RRD and WCD lines use 32-bit transmissions composed of one 16-bit synchronous word, followed by a 16-bit command frame. The sync word, 152, is processed at Level 0 and the command frame, 154, is processed at Level 1. All the 32 bits are transmitted as a single unit, and the initiation of 32-bit transmission is triggered by assertion of the RECEIVE READY signal. The synch word frame 152 starts with two bits of zeroes, followed by a 12-bit synch character and then two more zeroes. The Level 1 frame 154 is a 16-bit control frame.

Level 1

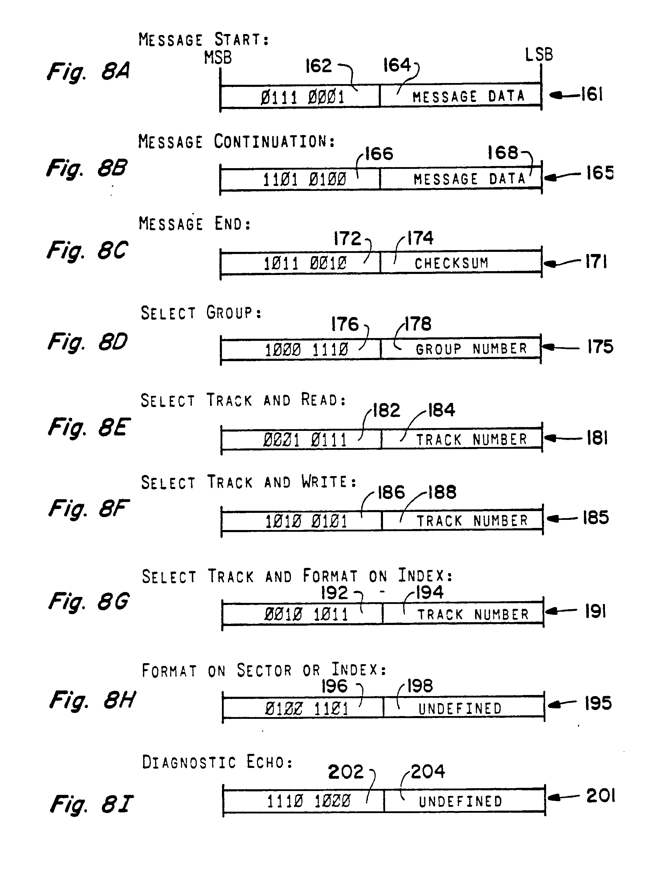

Figs. 8A—8I show the formats of each of the possible Level 1 frames. Each frame is transmitted in a separate 32-bit Level 0 transmission. Receipt of the Message Start frame code 162 (shown in Fig. 8A) in the high order byte of a Level 1 frame 161 indicates the start of a new control protocol message. The low order byte 164 of the transmission is interpreted as the first byte of the message.

Receipt of a Message Continuation frame code 166, as illustrated in Fig. 8B, indicates that the low order byte 168 of the frame 165 is the next byte of the message in progress.

Receipt of the Message End frame code 172 of Fig. 8C indicates that the entire control protocol message has been transmitted and that the checksum is available in the low order byte 174 for frame 172. The checksum is the one's complement of all message bytes starting with the message data byte of the Message Start frame and ending with a message data byte of the last Message Continuation frame. If the addition operation for any term results in a carry from the high order bit, the checksum is incremented before the next term is added. The checksum is complemented after all addition and increment operations for all terms have been completed. Checksum failure indicates a transmission error when a valid Message End frame was received. Framing codes are not included in the checksum.

Receipt of a SELECT GROUP frame code 176 (see Fig. 8D) outside of an exchange indicates that the drive is to lower READ/WRITE READY, reposition for I/O to the group specified in low order byte 178 of frame 175, and raise READ/WRITE READY when able to perform I/O on the specified group. If the repositioning operation fails, the drive keeps READ/WRITE READY low and reports the problem as a drive error via the Attention mechanism.

Receipt of a SELECT TRACK AND READ code 182 or SELECT TRACK AND WRITE code 188 (see Figs. 8E and 8F) outside of an exchange indicates that the drive is to select the appropriate track identified in byte 184 or 188 (of frames 181 and 185 respectively) and initiate the specified data operation at the trailing edge of the next sector or index pulse.

Receipt of a SELECT TRACK AND FORMAT ON INDEX code 192 (see Fig. 8G) outside of an exchange indicates that the drive is to select the appropriate track designated in byte 194 of frame 191 and initiate the specified data operation (i.e., format the sector) starting at the trailing edge of the next index pulse, provided that the "FO" status bit is enabled.

Receipt of a FORMAT ON SECTOR OR INDEX code 196 (see Fig. 8H) outside of an exchange indicates that the drive is to use the last selected track and initiate the specified data operation at the trailing edge of the next index or sector pulse, provided that the "FO" status bit is enabled. The low order byte 198 of the frame 195 is unspecified.

Receipt of a Diagnostic Echo frame code 202, illustrated in Fig. 8I, outside of an exchange indicates that the drive is to transmit the entire frame (using a diagnostic echo frame code) back to the controller as soon as the controller raises RECEIVER READY. This code is used to establish the integrity of the line and transmission logic. Low order byte 204 is undefined.

Receipt by the drive of a framing code other than the nine specified above is regarded as a transmission error. Receipt by the controller of a framing code other than the Message Start, Message Continue, Message End or Diagnostic Echo is regarded as a transmission error. Receipt of any valid framing code in other than the prescribed order also is regarded as a transmission error. Once a Message Start frame has been transmitted, all frames other than Message Continuation frames are illegal until the Message End frame has been received. Receipt of a frame other than Message Continuation within an exchange is considered a transmission error.

"Transmission errors" are errors detected due to Level 1 mechanisms. If the drive detects a transmission error, it must make certain that READ/WRITE READY remains low (it will have been lowered at the start of frame reception). The drive must then remain RECEIVER READY and receive additional frames until a Message End frame code is received. At that point, the problem is reported with an UNSUCCESSFUL response (using the "RE" error indicator). Depending on the reason for the transmission error, the following cases apply:

1. An error in a Message Start or Message Continue frame will result in the synchronous UNSUCCESSFUL response being triggered by the Message End frame; no reinitialization is necessary.

2. An error in the Message End frame will cause the response timer to expire because the drive will never respond.

3. The garbling of a data transfer or format command will cause the controller to time-out on READ/WRITE READY.

4. The garbling of a frame into a Message End frame will cause the response timer to expire, as both controller and drive will wait for a RECEIVER READY for the other party, and these will never come.

If the controller's Level 1 process detects a transmission error, it must wait for a Message End frame code before initiating recovery procedures. The response timer protects against bad Message End frame codes. The drive does not assert ATTENTION to report transmission errors.

Controller recovery from a transmission error consists of an interrogation of drive status, clearing of any errors, and reissuing the erroneous command. If no Message End frame is receive and the response timer expires, the drive must be reinitialized before the recovery process. The controller only makes one attempt to retry a transmission after a transmission error is detected.

The framing codes (i.e., the high-order byte of each frame) provide sufficient information for the receiver to perform optional single bit error correction and double bit error detection.

The minimum number of Level 1 frames transmitted as a result of a single transaction is one frame if the transaction was for a SELECT TRACK AND READ, SELECT TRACK AND WRITE, DIAGNOSTIC ECHO, SELECT GROUP, SELECT TRACK AND FORMAT ON INDEX, or FORMAT ON SECTOR OR INDEX Command. If the transaction was for a message transmission, the minimum transmission is two frames (i.e., a Message Start frame and a Message End Frame). The maximum number of Level 1 frames resulting from a single transaction is 64 frames (i.e., a Message Start frame, 62 Message Continuation frames and a Message End frame).

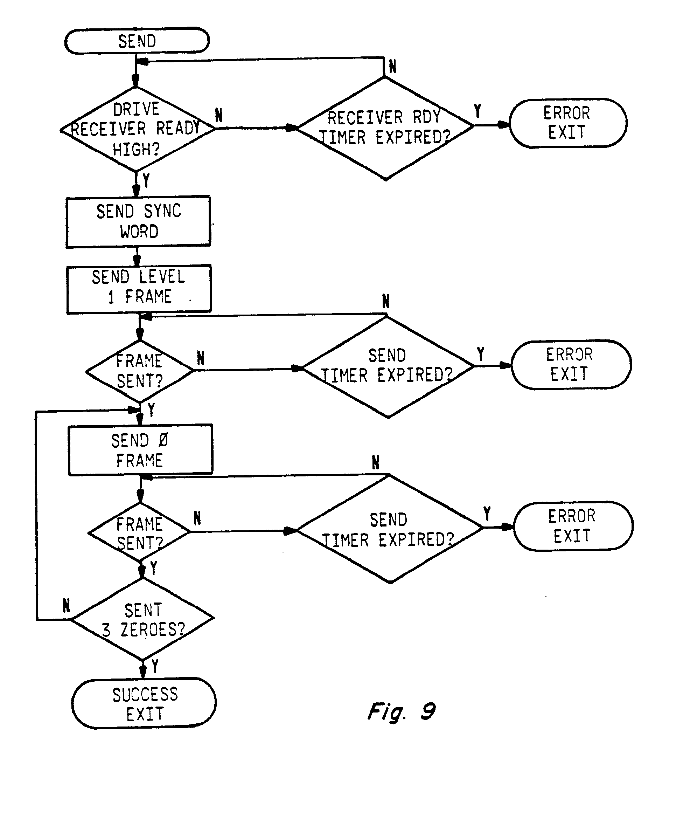

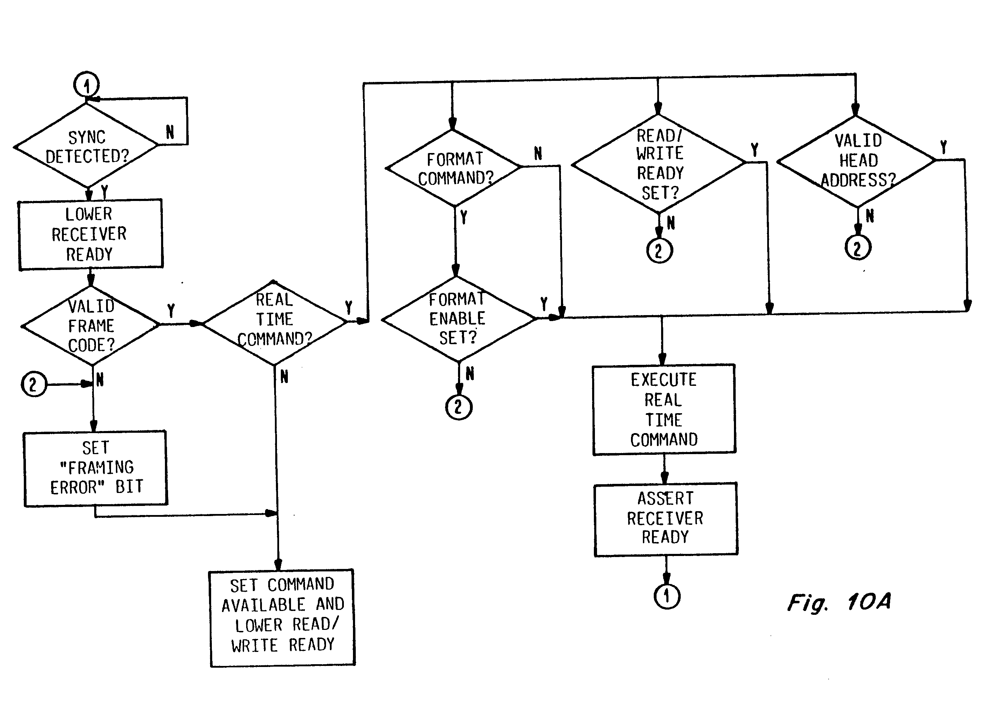

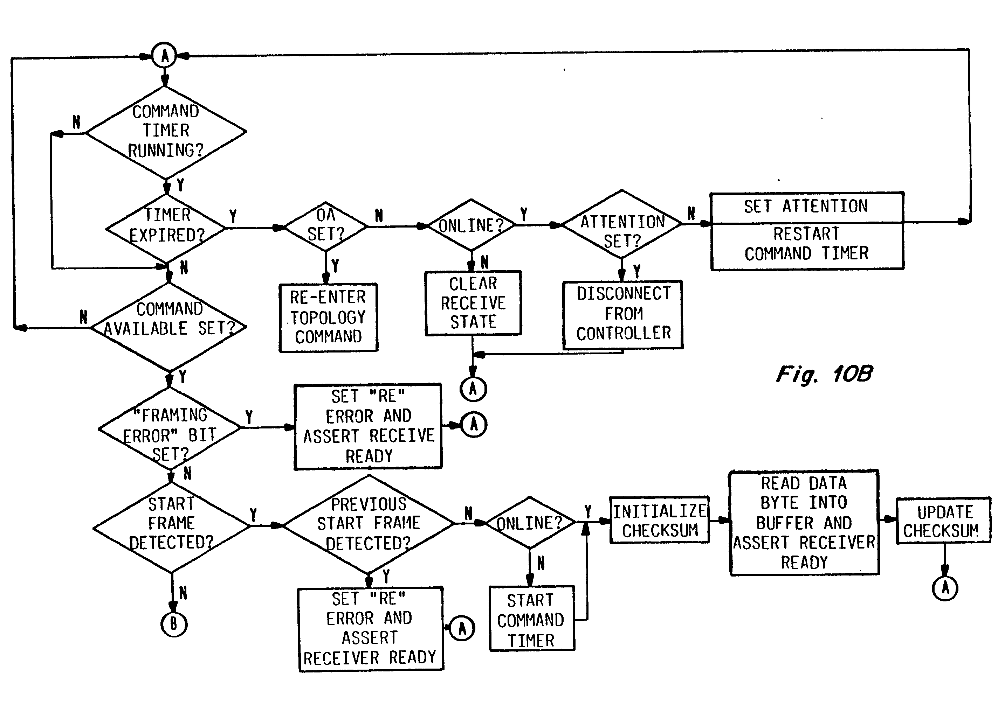

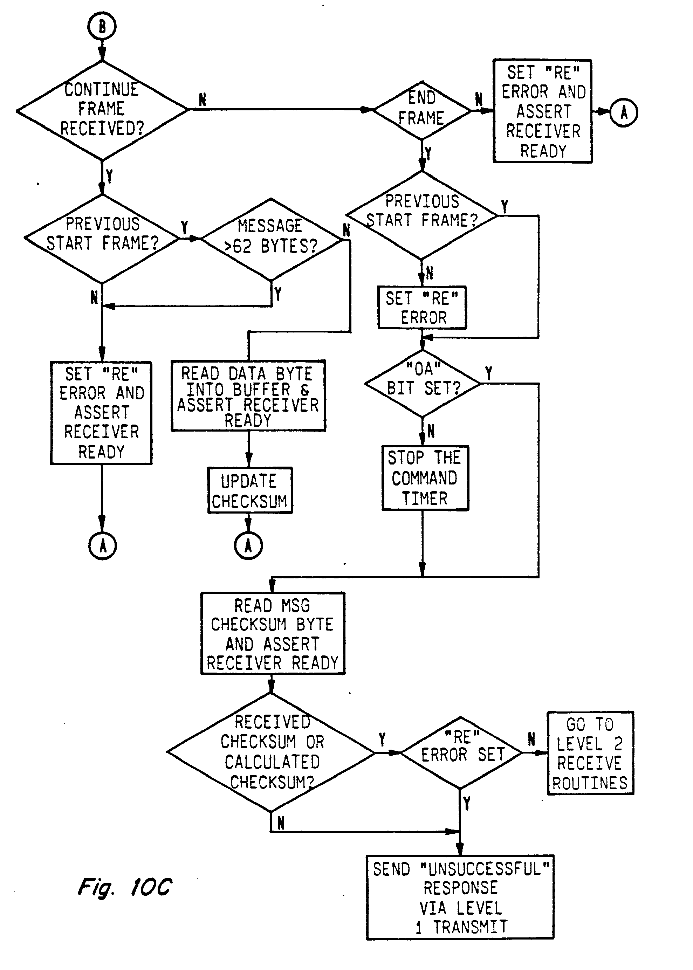

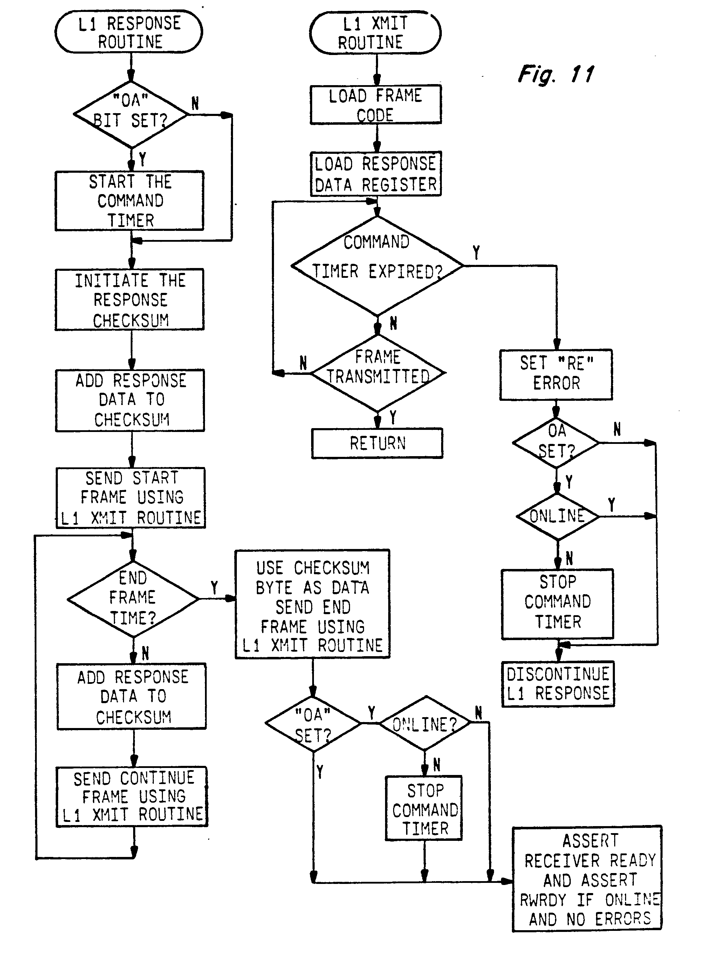

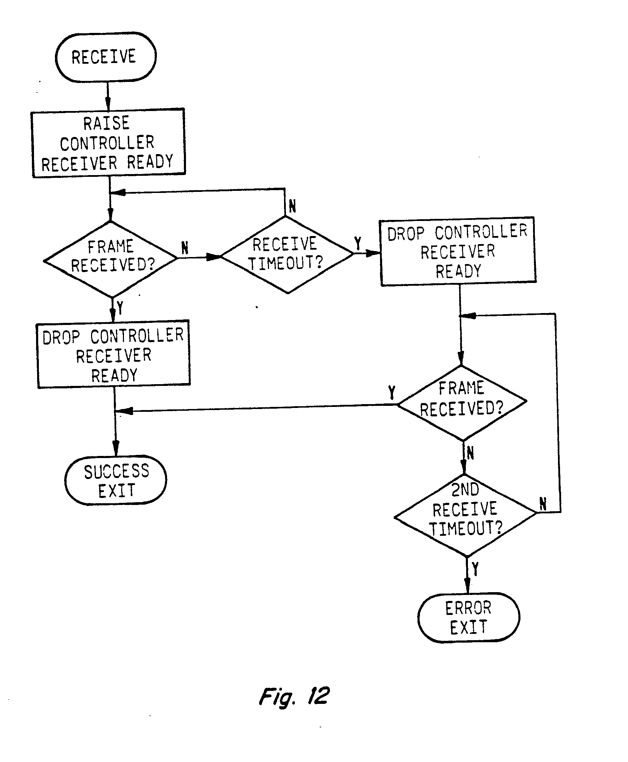

Flow charts for the processing of Level 1 frames are illustrated in Figs. 9—12. There, Fig. 9 represents the controller's actions for a Level 1 transmission. Correspondingly, the drive's actions for receiving the transmission are shown in Fig. 10. The drive transmits back to the controller in accordance with Fig. 11 and the controller receives this response as shown in Fig. 12.

Level 2 transmission

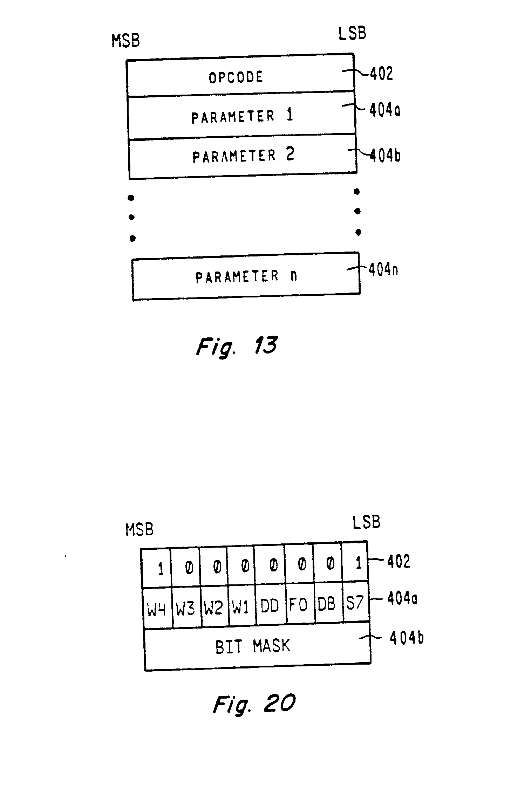

The format of a Level 2 message is illustrated in Fig. 13. The Level 2 opcode, transmitted in the first byte 402 of a Level 2 message, consists of 7 bits plus a high order even parity bit. Byte 404a—404n convey the parameters associated with the opcode.

The minimum Level 2 message size is 1 byte i.e., an opcde. The maximum Level 2 message size is 63 bytes. The frame composition has already been stated. The number of parameter bytes in any given message is a function of the message itself. If the message always has a fixed number of parameters, they typically follow the opcode directly. If the message has a variable number of parameters, one of the parameter bytes is used to specify a count of the number of remaining parameter bytes to expect.

Level 2 messages must be validated before they are acted upon; Level 2 information is not processed at all if a transmission error is detected in Level 1. The following conditions are treated as a Level 2 protocol error: an invalid opcode; an invalid or inconsistent parameter or an incorrect number of parameters for the opcode or byte count; and a valid opcode or parameter inconsistent with the drive's current state or physical status.

The driver recovers from a Level 2 protocol error by sending an UNSUCCESSFUL responde back to the controller with a protocol error ("PE") indicated in the status summary. Conversely, the controller recovers from a Level 2 protocol error by clearing the error and retrying the command after any necessary correction. Only one retry is attempted.

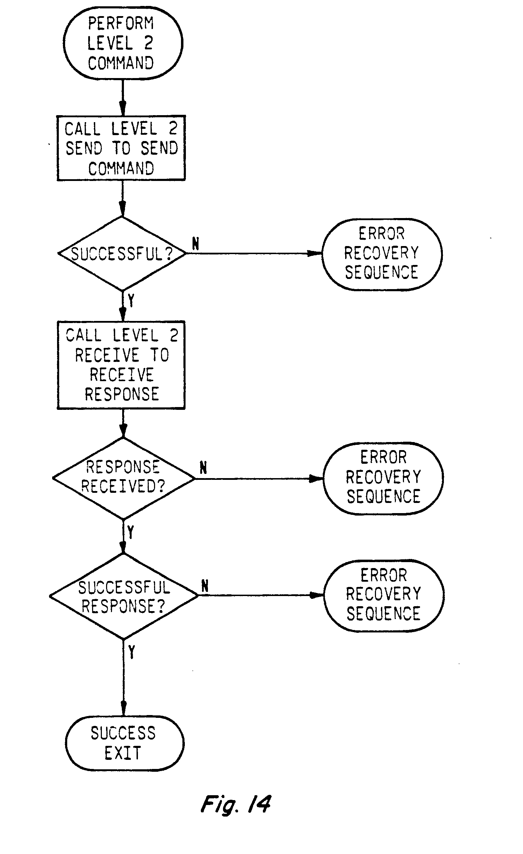

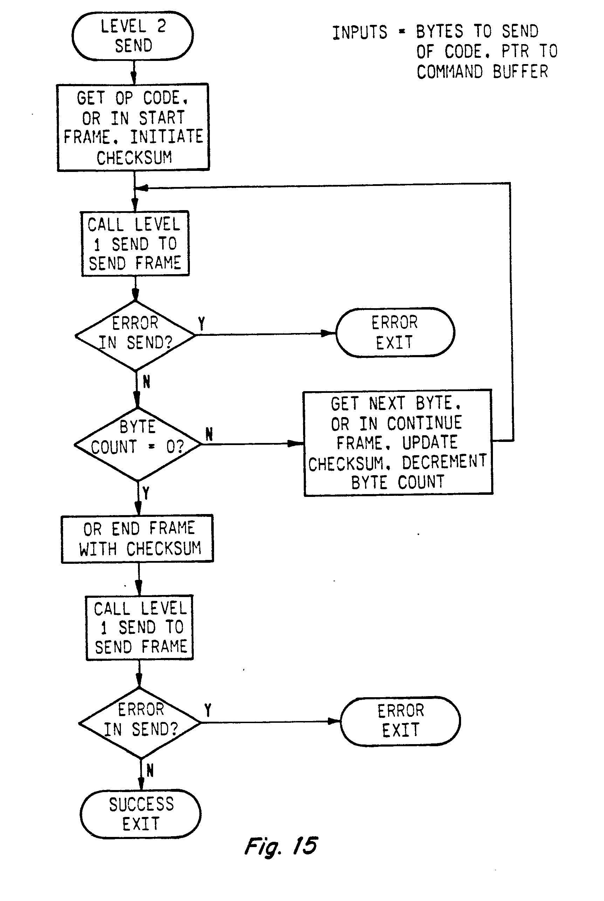

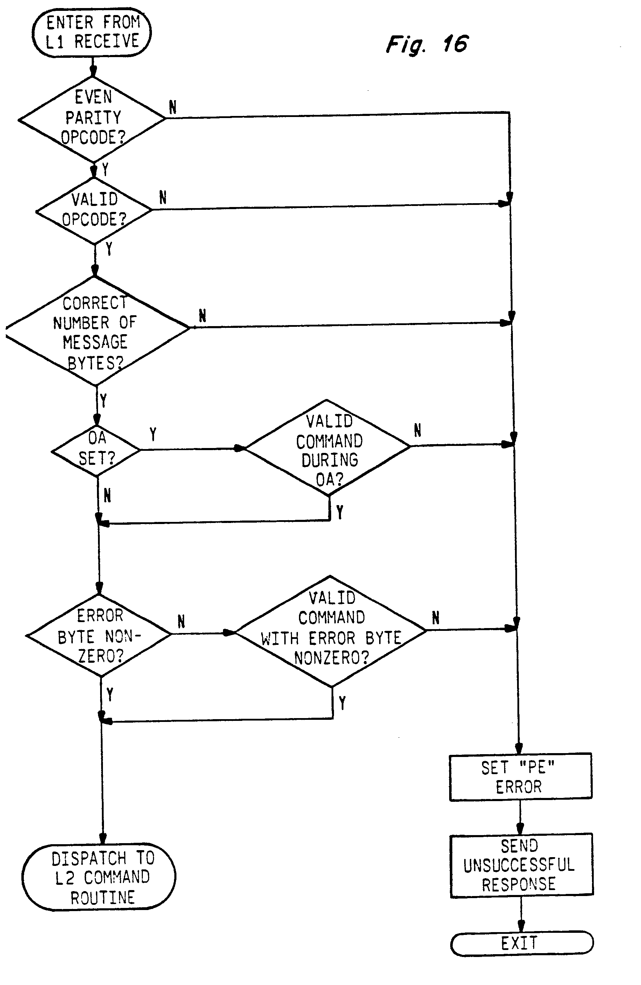

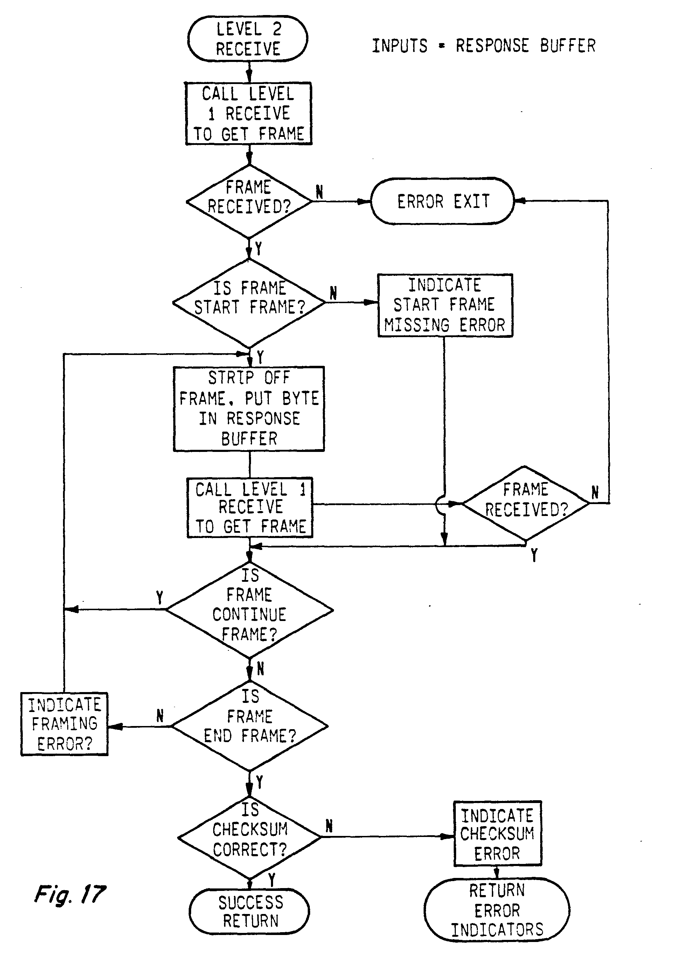

All Level 2 commands are performed at the controller in accordance with the process of Fig. 14. In turn, this calls the process of Fig. 15 for sensing Level 2 messages from the controller to the drive; the drive acts on such transmissions as represented in Fig. 16. In turn, the controller actions on receipt of a Level 2 response are illustrated in Fig. 17.

In the illustrated embodiment, there are 16 possible controller commands: CHANGE MODE, CHANGE CONTROLLER FLAGS, DIAGNOSE, DISCONNECT, DRIVE CLEAR, ERROR RECOVERY, GET COMMON CHARACTERISTICS, GET SUBUNIT CHARACTERISTICS, GET STATUS, INITIATE SEEK, ONLINE, RUN, READ MEMORY, RECALIBRATE, TOPOLOGY, and WRITE MEMORY. Only certain of these commands are of such interest as to justify detailed commentary.

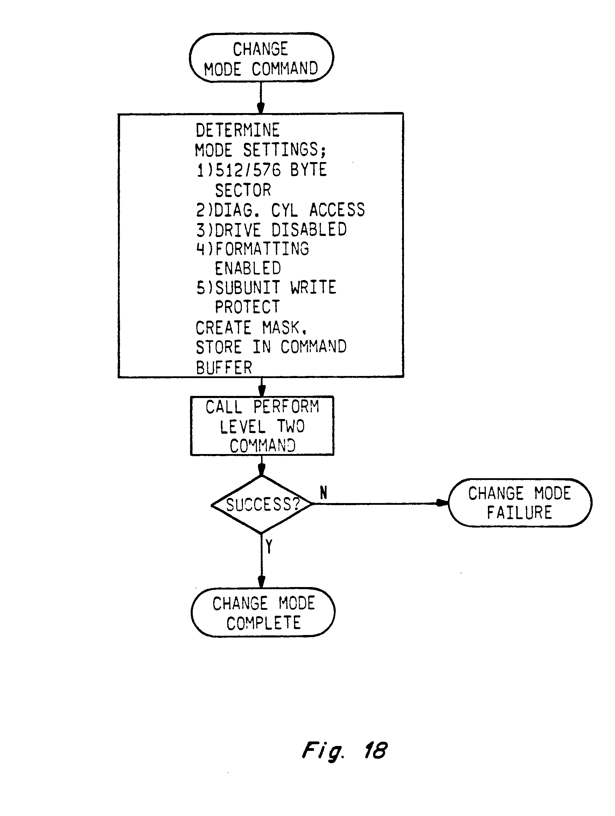

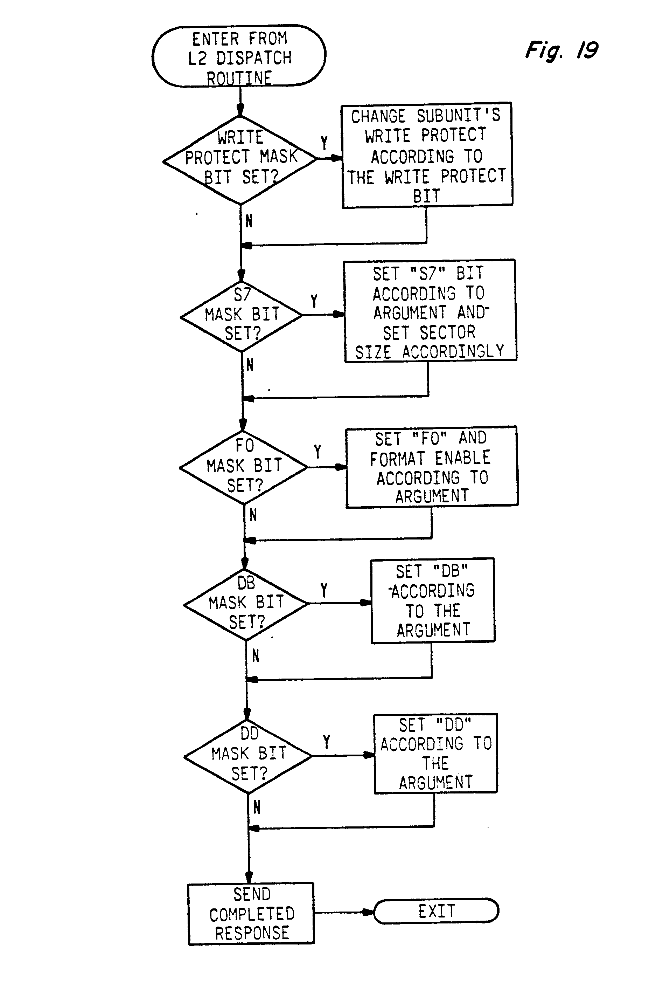

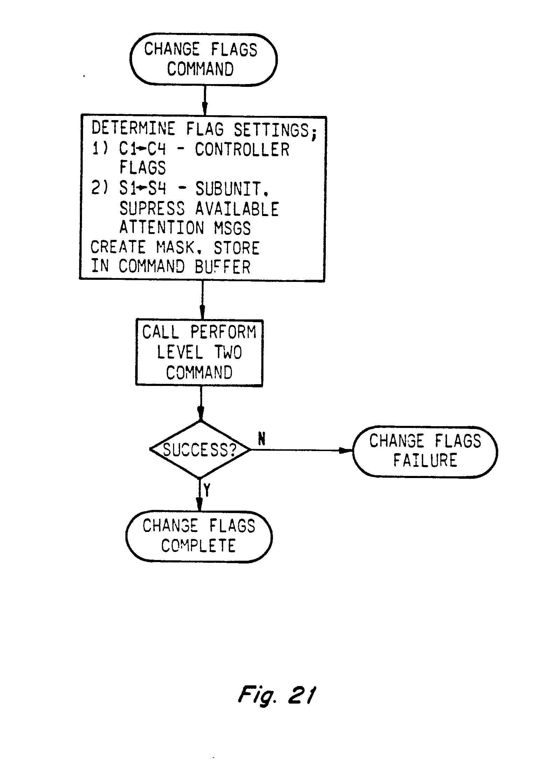

The CHANGE MODE command is processed by the controller as indicated in Fig. 18 and by the drive as shown in Fig. 19. The command's format is shown in Fig. 20. This command instructs the drive to alter its mode to the specified mode settings. The command opcode is contained in byte 404. Byte 404b is a mask for byte 404a; the only bits in byte 2 which are to be acted upon are those for which the corresponding bit in byte 404b is set. The other mode bits remain unchanged.

Mode bits W1—W4 in byte 404a correspond to write-protect flags. If one of these bits is masked and its value is 1, then the corresponding subunit is to be write-protected; if masked but 0-valued, the subunit is to be write-enabled. The request to write-enable a subunit will be refused by the drive unless its write enable/write protect switch is in the write enable position. (Note that a non-multi-unit drive is the equivalent of the degenerate case of a multi-unit drive having only one subunit).

Acceptable responses are: (1) UNSUCCESSFUL for the indicated reason or (2) COMPLETED, indicating that the drive is now operating with the requested mode settings and write protect status. These responses are universal to Level 2, and are returned to all commands except those for which status information is included in the response.

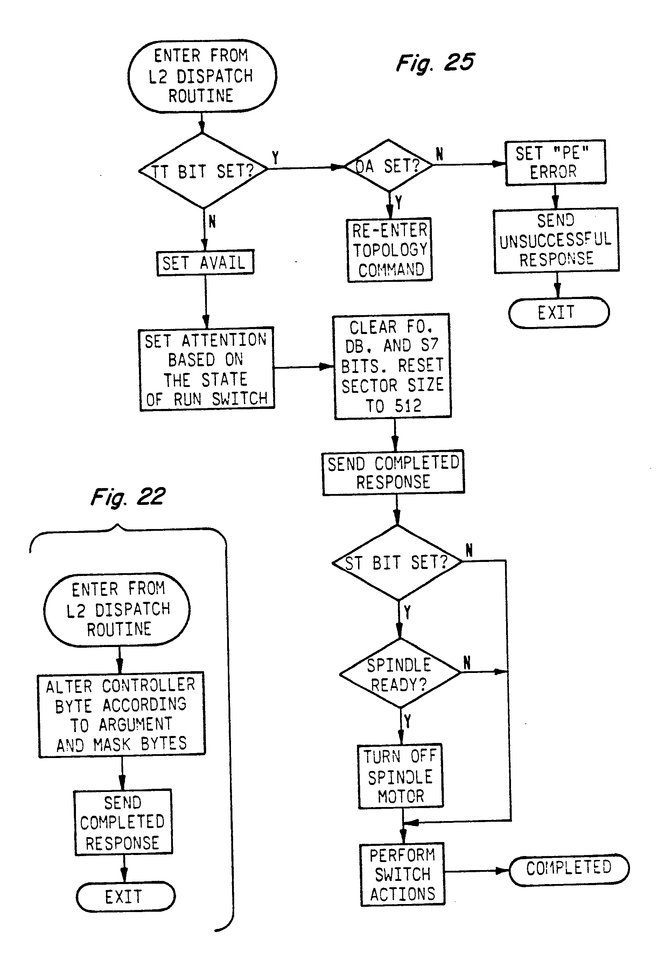

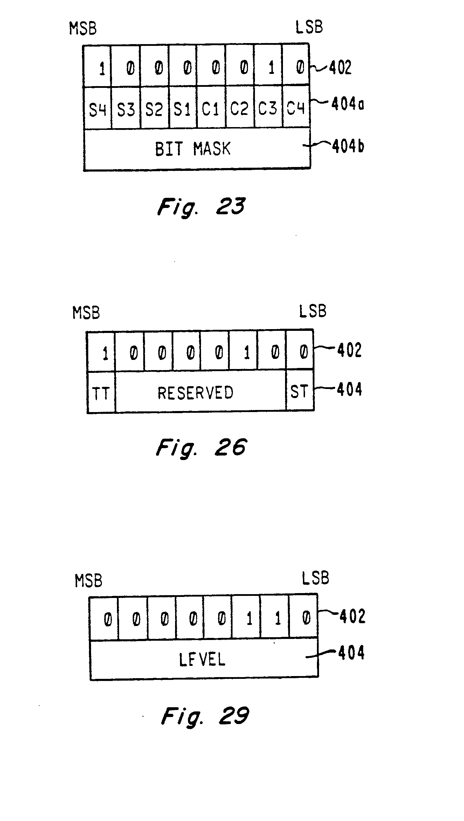

The CHANGE CONTROLLER FLAGS command is also a three byte command. Figs. 21 and 22 show the controller and drive processing, respectively, for the command. The format of the command itself is illustrated in Fig. 23. This command directs the drive to change the specified bit(s) in the status "controller byte" to the value(s) supplied. Byte 402 contains the opcode for the commande. Byte 404b is a bit mask for byte 2; the only bits in byte 404a which are to be acted upon are those for which the corresponding bit in byte 40b is set; other bits remain unchanged.

The functionality of the DIAGNOSE command is uninteresting for the present discussion and will be omitted for the sake of clarity.

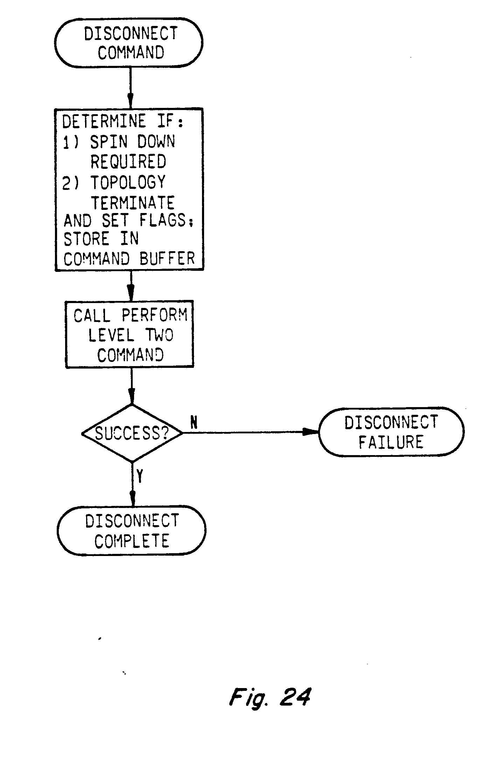

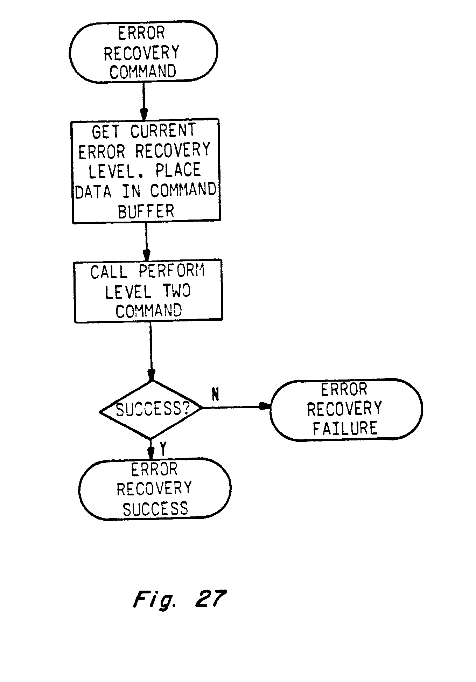

The processing of the DISCONNECT command by the controller and drive, respectively, are illustrated, in Figs. 24 and 25. The DISCONNECT command directs a "drive-online" drive to enter the "drive-available" state relative to all active ports. The command format is depicted in Fig. 26. There, the command opcode is shown in byte 402. If the "ST" bit in the "modifier byte" 404 of this command is not zero, the drive stops the disk from spinning. If the "ST" bit is zero, the drive does not alter the state of its spindle(s). When spinning inoperative the disk, the drive simply initiates the stop operation and waits long enough for the "SR" status bit to become zero before reporting success; it does not wait for the disk to stop. The "TT" bit (i.e., the MSB in byte 404) is used to dismiss the drive and allow it to return to its online port.

The DRIVE CLEAR command is uninteresting for purposes of this discussion, so an explanation of its operation will be omitted in the interest of clarity.

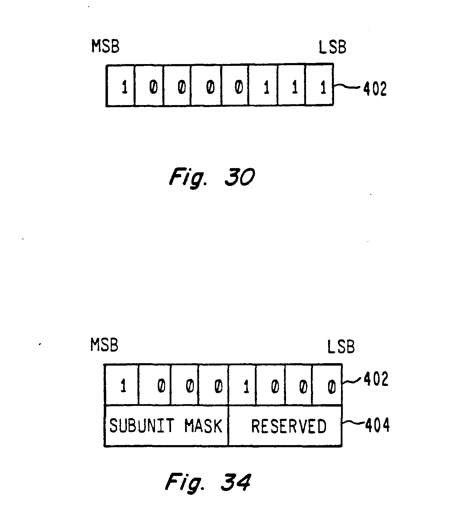

The ERROR RECOVERY command is processed by the controller and drive as shown in Figs. 27 and 28, respectively. This command permits the initiation of drive-specific error recovery mechanisms. While a drive can (and preferably will) have available multiple error recovery mechanisms (i.e., levels), the controller need not know the details of these error recovery techniques, and they can vary from drive to drive. The controller merely identifies a drive's error recovery mechanisms by numbers; for example, the highest numbered mechanism may be the one having the greatest a *priori* probability of success. The remaining mechanisms then are ordered and numbered sequentially according to decreasing probabilities of success. The controller starts by requesting a drive to use its primary (i.e. highest-numbered) error recovery mechanism; if that fails, the controller next requests the secondary mechanism, tertiary, etc. It is up to drive designers to implement recovery mechanisms appropriate for their particular drives, and to order them for maximum effectiveness. The format of the command is illustrated in Fig. 29. The command's opcode is transmitted in byte 402 and the error recovery level is sent in byte 404.

Initially, the drive specifies how many error recovery levels it has, as a drive characteristic returned in the response to the GET COMMON CHARACTERISTICS command. When a data error occurs which cannot be corrected by the error correcting code in use, the controller issues one or more ERROR RECOVERY commands. The highest level is used first and the failed operation is retried after each level. If still unsuccessful, the next level is attempted. This continues until the operation succeeds or all the possible error recovery levels (and mechanisms) have been exhausted.

It should be noted that only the controller knows whether error recovery has been successful, so only the controller can decide whether to go on from one error recovery level to the next. Conversely, the ERROR RECOVERY command is intended only for recovery from data errors detected by the controller. Other errors are dealt with by the drive or by retry of other commands.

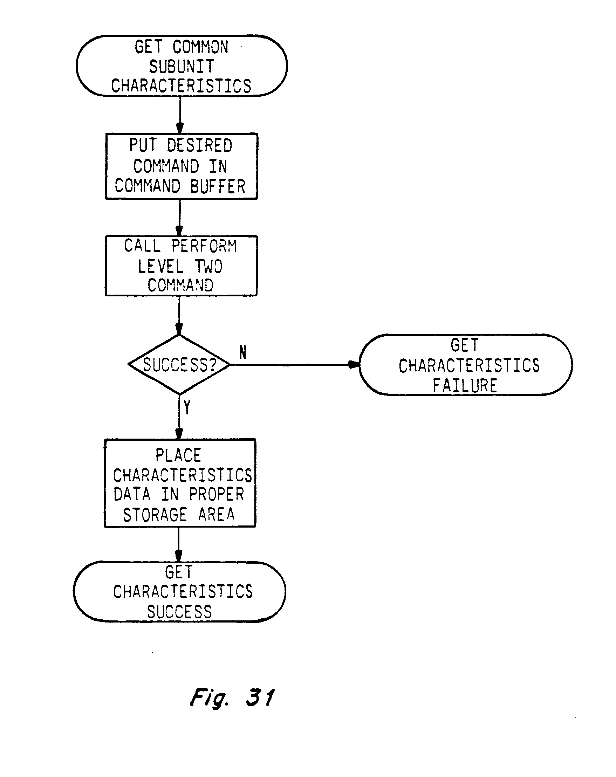

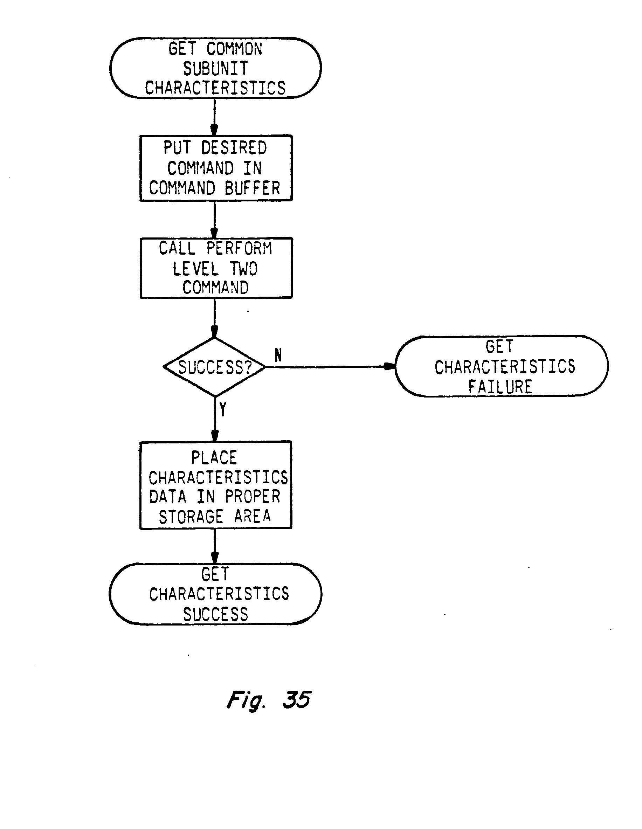

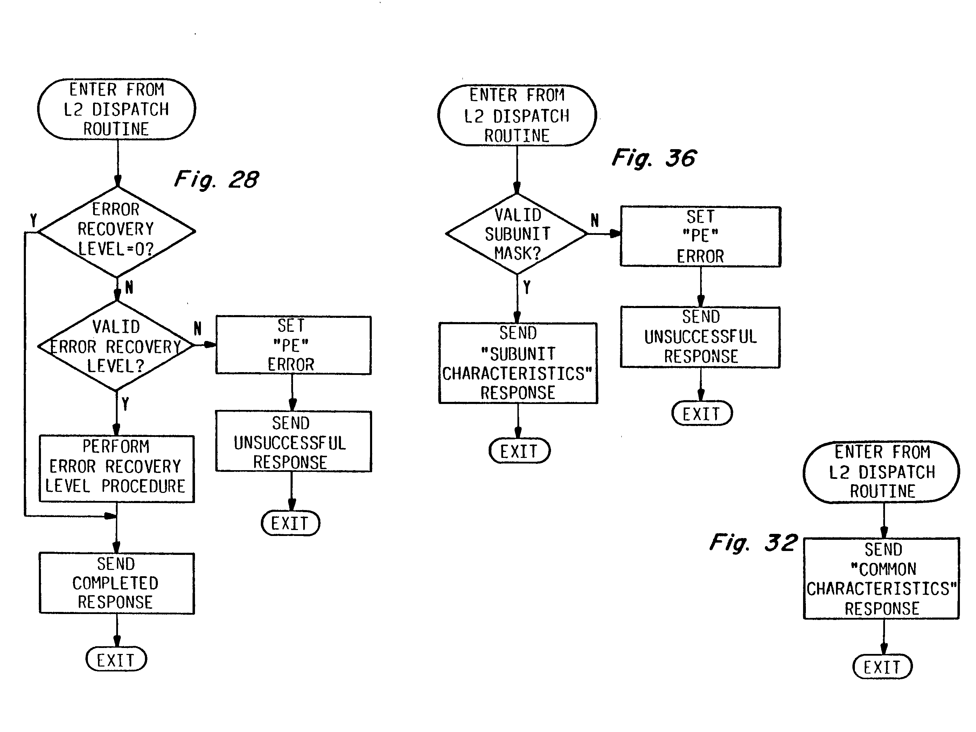

The GET COMMON CHARACTERISTICS command is a one byte command having the format indicated in the one byte 402 of Fig. 30. It is processed by the controller as shown in Fig. 31 and by the drive as shown in Fig. 32. This command requests the drive to send to the controller a description of the characteristics common to all subunits of the drive.

Upon completion of the exchange, the drive state is unchanged relative to all controllers. This command is valid when the status "error byte" is non-zero and validly pertains to all "drive-unavailable" drives.

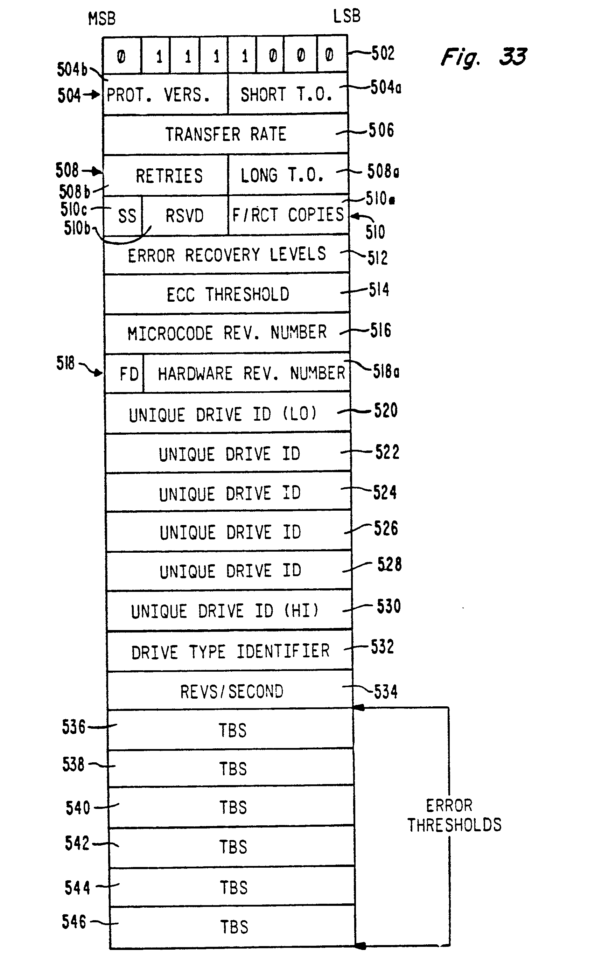

Acceptable responses to the GET COMMON CHARACTERISTICS command are: (1) UNSUCCESSFUL, for the indicated reason and (2) a GET COMMON CHARACTERISTICS response of the format indicated in Fig. 33.

As shown in Fig. 33, the GET COMMON CHARACTERISTICS response involves a 23 byte sequence. The first byte 502 indicates the nature of the response and may, for example be coded as indicated in the figure. The lower half 504a of the second byte 504 contains C"short time-out" count (expressed as a power of 2) representing the time to be used for timing out the worse case operation excluding DIAGNOSE, RUN, and RECALIBRATE. This time should include that necessary for drive-controlled retries. The upper half 504b of the second byte 504 signifies the version of the communications protocol employed by the drive, to ensure controller and drive compatibility. The third byte 506 contains a number proportional to the drive's transfer rate. The lower half 508a of the fourth byte 508 contains a long time-out, which is the time used for DIAGNOSE, RUN and RECALIBRATE operations. The time out appropriate for the longest of these is supplied. The "retries" entry in the upper half 508b of byte 508 indicates the number of times the controller should retry the data transfer operation before giving up. (All non-data transfer errors, of course, are retried only once).

The next byte, 510, is also subdivided, but this time into three parts. The lower half 510a of byte 510 contains information as to the number of copies of the format and revector control tables maintained in the drive. (For a more complete discussion of the format and revector control tables, see the above-identified application for Disk Format for Secondary Storage System). The next three bits 510b are reserved. The uppermost bit 510c contains sector size information. For example, it may contain a zero if the drive employs 512 byte sectors only and a one if it employs 576 byte sectors (or 576 byte sectors of which only 512 bytes are used).

Byte 510 contains the number of error recovery levels available in the drive.

Byte 514 contains a number representing the number of symbols in error considered serious enough to initiate a revectoring operation. Thus, if this threshold is exceeded for a particular sector, then as a preventive measure, that sector is replaced by a spare sector reserved for that purpose; the data is rewritten in that spare sector so as not to lose data when the sector degrades to a point that the error correcting code can no longer restore it. Subsequent accesses to the bad sector are redirected to its remplacement sector.

Byte 516 contains an indication of the microcode revision to which the drive is current.

Byte 518 is subdivided so that the lower 7 bits 518a include a hardware revision number.

Bytes 520—530 contain a unique drive identifier, or serial number, each drive having its own unique numbering in these bytes.

Byte 532 contains a drive type identifier.

Byte 534 contains a number representing the rotational speed of the disk (in revolutions per second) and bytes 536—546 contain error threshold information.

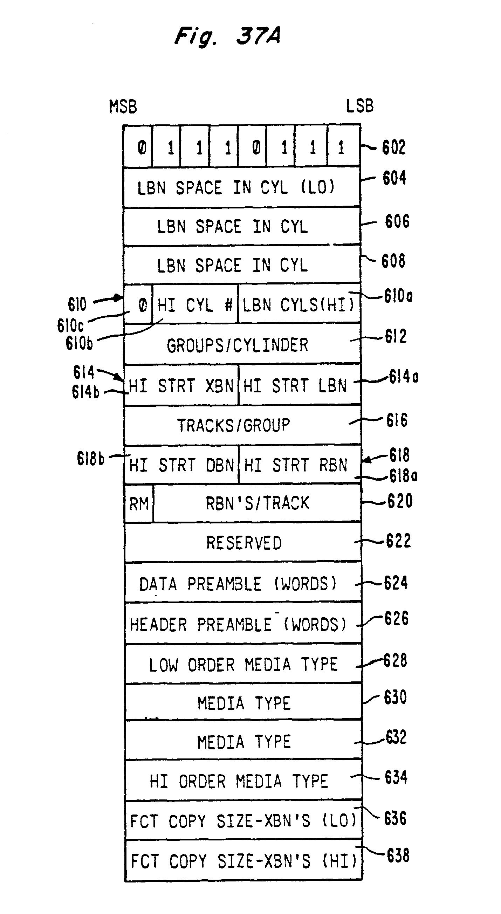

The GET SUBUNIT CHARACTERISTICS command is a two byte command having the format illustrated in Fig. 34. Byte 402 is the opcode and byte 404 contains a subunit mask in its upper half. The controller and drive processing of the command are shown in Figs. 35 and 36, respectively. Its function is to request the drive to send the controller a description of the geometrical characteristics of the subunit specified in the subunit mask. This mask which must have exactly one bit set in it; that bit must also be one of the bits set in the subunit mask returned by the GET COMMON CHARACTERISTICS command.

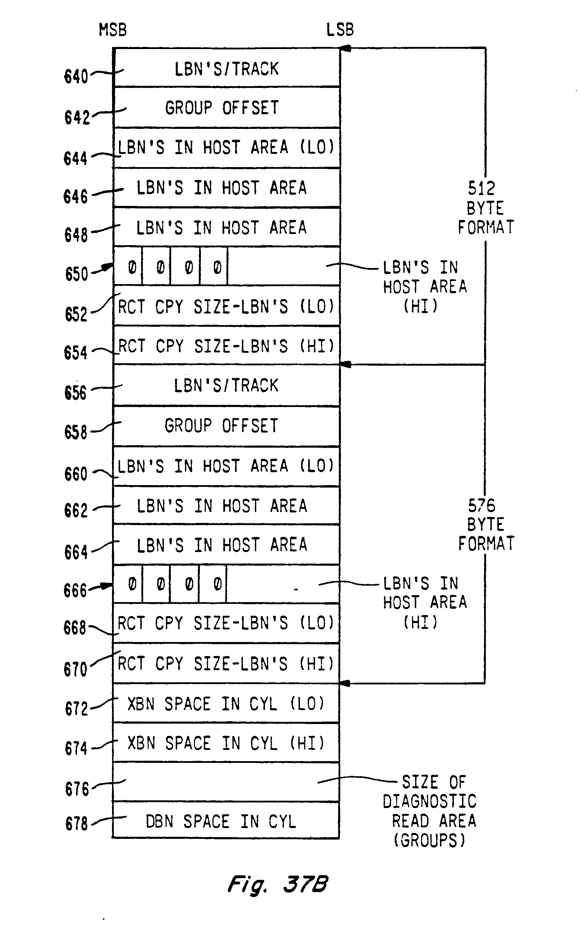

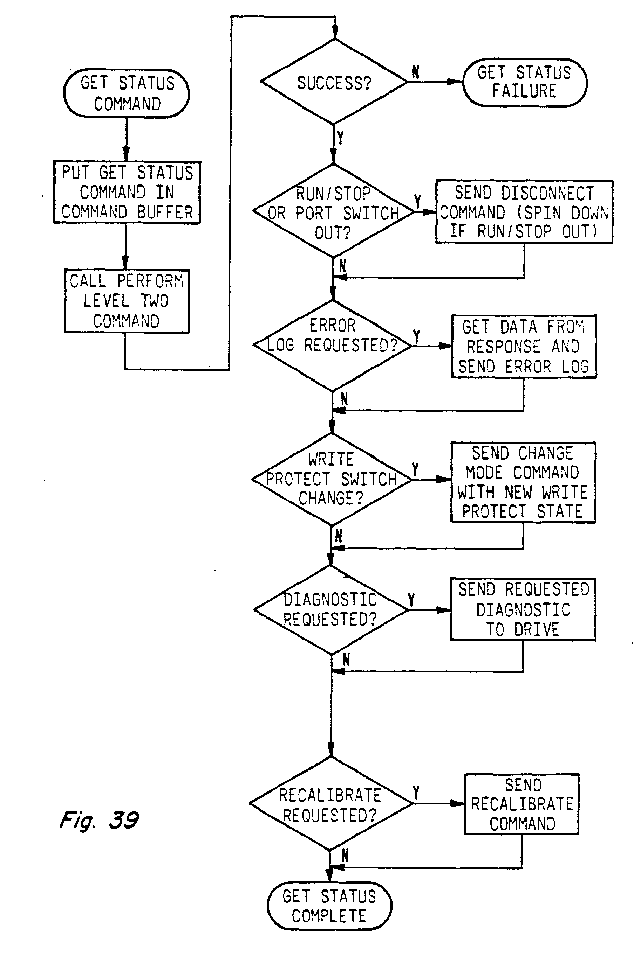

Acceptable responses to the GET SUBUNIT CHARACTERISTICS command are either UNSUCCESSFUL for the indicated reason or else have the 39 byte format of Figs. 37A and 37B.

The first byte 602 of the response format in Figs. 37A and 37B is preselected as having a fixed pattern, such as the one illustrated. Bytes 604—608, and the lower half 610a of byte 610 indicate the size of the subunit's LBN space, in cylinders. The next three bits 610b in byte 610 represent the number of the highest cylinder. MSB 610c is always zero. Byte 612 contains the number of groups per cylinder; byte 616, the number of tracks per group. The LBN space starts at the address signified by the lower half 614a of byte 614, which gives the address of the higher-order half of the starting LBN entry. The starting addresses for the XBN, RBN and DBN spaces are similarly specified in the upper half 614b of byte 614 and the lower and upper halves 618a and 618b of byte 618, respectively.

Byte 620 contains seven bits signifying the number of replacement blocks (i.e., RBN's) per track and an eighth bit which is not germane to this discussion. As indicated, there is no present function assigned to byte 622; it is "reserved" for use when an extra byte is needed.

The sizes of the data and header preambles (in words) are provided in bytes 624 and 626, respectively. Media type is specified in bytes 626—634; this indication may refer, for example, to a manufacturer's drive types. Bytes 636 and 638 contain an indication of the size of a copy of the format control table (FCT).

Where a disk drive may employ one of two byte-per-sector formats, the subunit characteristics response contains a first group of bytes (e.g., bytes 640—654) which are used only when the drive utilizes a first byte/sector format, and a second group of bytes (e.g., bytes 656—670) which are used only when the drive employs a second byte/sector format. These formats may, for example, be 512 and 576 bytes/sector, respectively. Byte 640 or 656, as the case may be, provides the number of LBN's per track. The group offset for spiral reading is indicated in byte 642 or 658. The contents of bytes 644—650 (lower half) or 660—666 (lower half) is the number of LBN's in the host applications area—i.e., the size of the memory presented to the host for applications use. Bytes 652 and 654 or 668 and 670 signify the size of one copy of the RCT, in LBN's.

The size of XBN space, in cylinders, is indicated in bytes 672 and 674. Byte 676 contains the size of the diagnostic read area, in groups. And byte 678 represents the size of the DBN space, in cylinders.

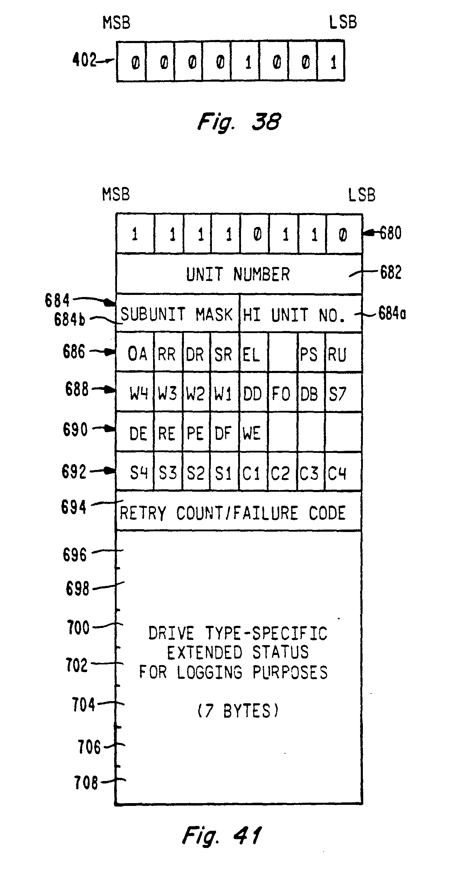

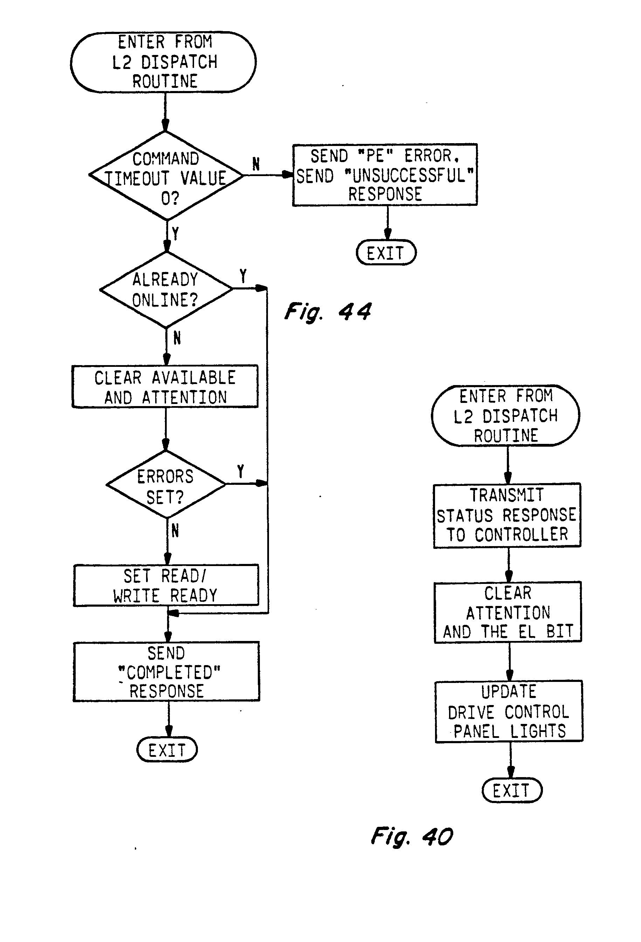

The GET STATUS command is a one byte command having the format illustrated in Fig. 38. It is processed by the controller as depicted in Fig. 39, and by the drive as depicted in Fig. 40. This command is used to request that the drive sends its current status to the controller. Upon completion and validation of the command, a "drive-online" drive lowers the ATTENTION signal if it had been asserted.

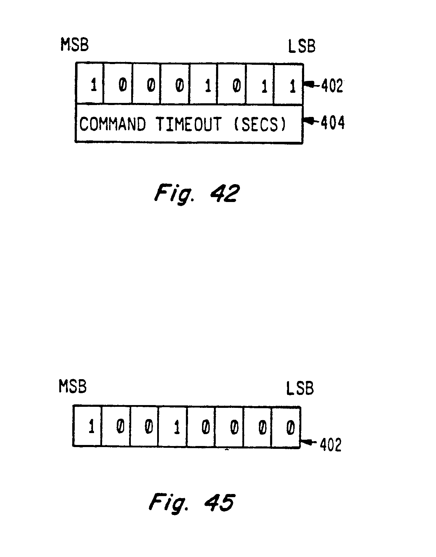

Two possible responses may be provide: (1) UNSUCCESSFUL, for the indicated reason, and (2) a status response of the format shown in Fig. 41.

In Fig. 41, byte 682 contains the eight lower bits of a 12-bit unit number. The rest of the unit number is contained in the four lower bits 684a of byte 684. The four upper bits 684b of byte 684 contain a subunit mask.

Bytes 486—690 contain the "generic status bits".

More particularly, byte 686 is a "request" byte.

More particularly, byte 686 is a "request" byte. The least significant bit "RU" in byte 686 indicates the status of the RUN/STOP switch; it may be zero if the switch is out and one if the switch is in, for example. The next lower bit, "PS", indicates the status of the port switch; it may be zero if the switch is out, and one if the switch is in. The fourth bit, "EL", indicates whether bytes 696—708 contain useful information; a "1" represents an affirmative statement. The fifth bit, "SR" indicates whether the spindle is ready; for example, if the bit is zero, the spindle is not ready and is not up to speed, and if it is one, the spindle is ready. The next bit, "DR", indicates whether diagnostics are requested. The next, "RR", bit signals whether time is requested for doing internal operations. And the most significant bit, "OA", indicates drive state; if zero, the drive is "drive-online" or "drive-available" to the controller, whereas if it is a one, the drive is "drive-unavailable" to the controller (it may, of course, be "drive-online" to another controller).

Byte 688 is the "mode byte". The least significant bit of this byte, "S7", signals sector format. The controller may, for example, operate with drives employing either 512 byte sector format or 576 byte sector format. The "S7" bit signals the controller as to the format employed by the drive. The second bit in this diagnostic cylinder byte is the "DB" bit, which signals whether external access is disabled or enabled. The third bit in the mode byte is the "FO" bit, which signals whether formatting operations are disabled or enabled.

The "DD" bit, which comes next, indicates a drive enabled/disabled condition; it is zero when the drive is enabled by a controller error routine or diagnostic and one if the drive is disabled by a controller error routine or diagnostic. Bits W1—W4 signal whether the write protect switch is in or out for the subunit associated with each bit. (Note that it is customary in the art to use "write protect" circuitry to prevent unintended writing over data to be preserved).

Byte 690 is an "error byte". Its first three low-order bits are blank. The fourth bit, "WE", is a write-lock error flag, which is a one in the event of an attempt to write to the drive while it is write-locked. The next bit, "DF", signals an initialization diagnostic failure. The sixth bit of byte, "PE", signals a Level 2 protocol error. The next bit, "RE", signals a transmission error. The most significant bit in the byte, "DE", signals a drive error.

All bits in the error byte are set by the drive as appropriate and are cleared by the controller via a DRIVE CLEAR command.

Byte 692 is termed the "controller byte". All bits in the controller byte are ignored by the drive except that they are changed by the CHANGE CONTROLLER FLAGS command and cleared by the drive under the appropriate state conditions. The C flags (Cn) and the S flags (Sn) are cleared whenever the drive is "drive-off line" to all controllers. All bits in the controller byte are preserved across an INIT operation.

Byte 694 contains a count of the number of retries, or a failure code.

Bytes 696—708 contain drive type-specific extended status for logging purposes. The subunit mask defines how many subunits are present in the drive. The subunits are identified as bit positions in the mask.

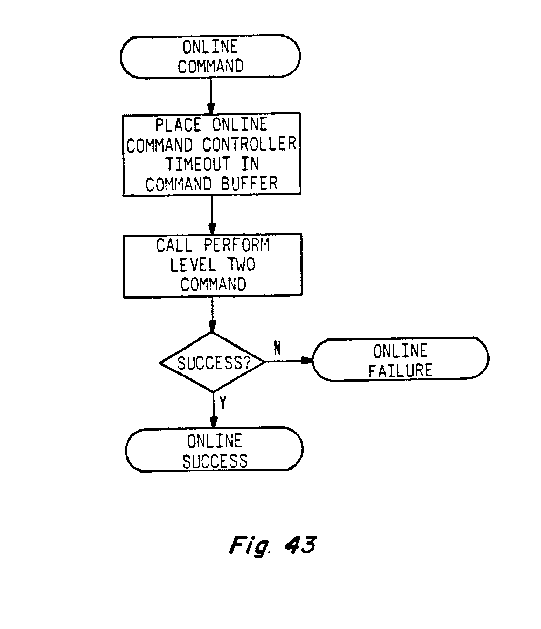

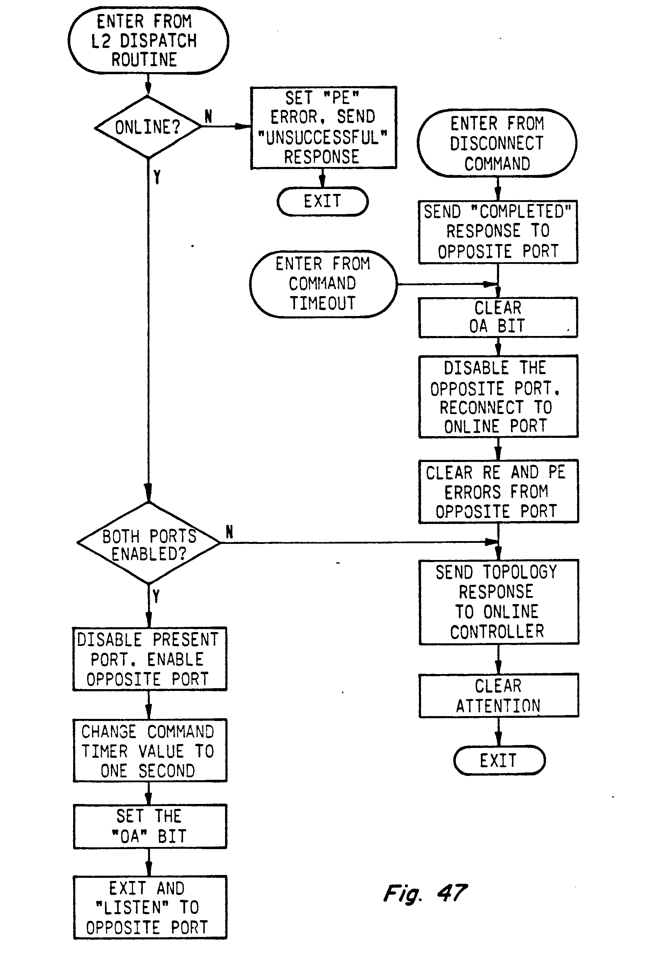

The ONLINE command has the two byte format illustrated in Fig. 42. Its processing by the controller is shown in Fig. 43; and by the drive; in Fig. 44. This command causes the drive to enter the "drive-online" state relative to the issuing controller. It also supplies the drive with the time out period to be used for its command timer. Upon completion of the exchange, the drive is "drive-online" to the issuing controller and "drive-unavailable" to all other ports.

The RUN, READ MEMORY, RECALIBRATE and WRITE MEMORY commands are uninteresting in so far as the present invention is concerned. Therefore, for the sake of clarity and brevity, they will not be explained further.

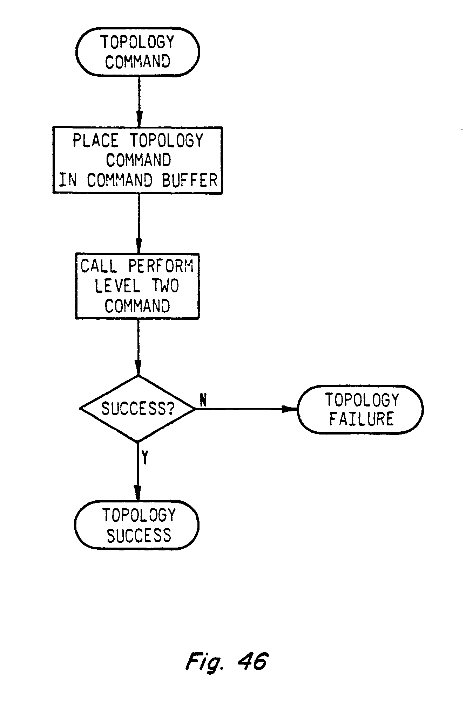

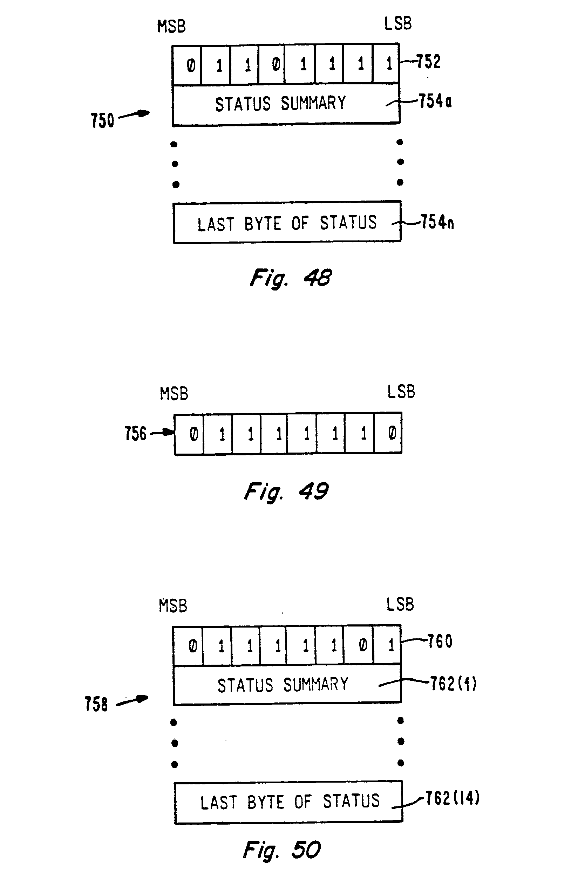

The TOPOLOGY command according to the invention has the one byte format illustrated in Fig. 45. The controllers' processing routine is shown in Fig. 46 and the drive's processing routine, in Fig. 47. This command instructs the drive to make itself available for dialog with any controller(s) on enabled alternate port(s).

The TOPOLOGY command according to the invention is unique in its application. Its purpose is to permit the host to determine all possible paths to each drive in the system. Each host may connect to multiple controllers; conversely, each controller may be accessible to multiple hosts. In turn, each drive may be accessible by multiple controllers.

Upon receipt and validation of the TOPOLOGY command the drive ceases transmitting drive state information through the port which was online and diverts its activity to the first of any enabled alternate ports. Leaving its actual state relative to all accessible controllers unchanged throughout this operation, the drive transmits AVAILABLE and ATTENTION signals to the alternate controller which are equivalent to those that would be transmitted if the drive were in the "drive-available" state relative to that controller, and prepared to execute commands. While attentive to the alternate port, the drive will receive and execute GET STATUS, GET COMMON CHARACTERISTICS, GET SUBUNIT CHARACTERISTICS, CHANGE CONTROLLER FLAGS AND DISCONNECT commands as if the drive were in the "drive-available" state, except that the "OA" bit in the status summary will be asserted, and the bit in the DISCONNECT command is valid.

INIT signals and transmission and protocol errors are all processed as if the drive were in the "drive-available" state. The drive ceases being attentive to the alternate port when (1) a predetermined time expires or (2) a DISCONNECT operation with set is conducted successfully on the alternate port. (This exchange is a signal from the alternate controller that no further commands are forthcoming).

Upon the occurrence of one of the above conditions, the drive clears "RE" and "PE" in its status summary and repeats the cycle on the next enabled alternate port, until all alternate ports have been covered. The state and data lines on the alternate ports are then restored to the "drive-unavailable" state, the state bits are set appropriately for transmission to the online controller, and state transmissions are resumed to the online controller. Finally, OA, RE and PE are cleared in its status summary and a TOPOLOGY response 750 (as shown in Fig. 48), if successful, is sent to the online controller. The TOPOLOGY response comprises an identifier byte 752 and a plurality of status summary bytes 754a—754n.

If a switch changes, or other attention condition occurs, while the drive is attentive to an alternate port, the appropriate status bit is changed but the ATTENTION signal is not raised. The online controller will resolve the condition on completion of the TOPOLOGY exchange. Upon receipt of the TOPOLOGY response, the controller must examine the status summary and make sure no attention conditions arose while the drive was busy interacting with other controllers.

Upon completion of the exchange, the drive state is unaltered relative to all controllers; head position is undefined.

As stated above, there are two universal drive responses: COMPLETED and UNSUCCESSFUL.

The COMPLETED response 756 is one byte in length and has the format indicated in Fig. 49. This response notifies the controller that the command which initiated the current exchange has been completed successfully without the need for unusual error recovery. It terminates the exchange and frees the controller to issue another command.

The UNSUCCESSFUL response 758 is 15 bytes in length and has the format indicated in Fig. 50. Byte 760 identifies the response. Bytes 762(1)—762(14) are identical in format and context to the information returned in bytes (682—708 of the response to a GET STATUS command (see Fig. 44). This response notifies the controller that the command that initiated the command exchange could not be executed successfully. Information describing the overall nature of the error condition is included in the status summary portion of the response.

The UNSUCCESSFUL response 758 terminates the exchange and frees the controller to issue another command. Since at least one error bit will be set, it should be understood that certain command and data transfer operations are illegal until the errors are cleared.

**Claims**

1. A method for permitting the host of a data processing system to determine all possible accessing paths between a plurality of mass storage devices (30) and a plurality of controllers (20), whereby at least one of said mass storage devices being connected with several of said controllers and at least one of said controllers being connected with several of said mass storage devices, and whereby command and status information is exchanged between said controllers and said mass storage devices, said method being characterized by comprising the steps of:

A. each mass storage device sending device state information to a first controller via a first one of the mass storage device's ports;

B. the host sending to each controller a certain command signal for determining all such paths; and

C. responsive to said certain command signal, each controller sending to each mass storage device with which it may communicate a predetermined command signal (TOPOLOGY; Fig. 45) causing the mass storage device to cease sending state information via said first port and further causing said mass storage device to send state information via each of its other ports, if any, in turn, to the controller adapted to communicate with each of such other ports, while leaving the mass storage device's actual state relative to all accessible controllers unchanged.

2. The method according to claim 1 wherein the state information sent by a mass storage device to a controller includes information regarding the logical characteristics of the mass storage device.

3. The method according to claim 1 wherein the state information sent by a mass storage device to a controller includes information regarding the physical characteristics of the mass storage device.

4. A method for permitting a controller (20) to interrogate a mass storage device (30) having first and second ports for coupling to such first and second controllers (20) respectively, said mass storage device capable of being on-line through only one of said ports at a time, whereby the controller to which the other port is coupled is to be permitted to interrogate said mass storage device said method being characterized by comprising the steps:

—said mass storage device—responding to a predetermined command (TOPOLOGY, Fig. 45) received at said mass storage device through said on-line port to disable said on-line port and enable the other port while leaving the actual state of the mass storage device relative to the on-line port unchanged;

—sending a predetermined signal out through said other port after said on-line port has been disabled; and

—responding to further commands received through said other port to provide outputs through said other port indicative of the status and characteristics of said mass storage device.

5. The method according to claim 4 wherein first and second controllers are coupled respectively to said first and second ports and further including the step of sending said predetermined command from said first controller and sending said further commands from said second controller.

6. The method according to claim 5 and further including sending from said second controller to said mass storage device a disconnect command; and at said mass storage device, in response to said disconnect command, enabling said on-line port and disabling said other port and resuming the sending of state information through said on-line port in the same manner as prior to said first predetermined command.

7. The method according to claim 6 and further including, upon receipt of said first predetermined command, setting a timer at said mass storage device, and upon expiration of said timer, if a disconnect command has not been previously received, restoring said mass storage device to its initial condition.

8. A method of permitting the determination of the topology of a data processing system including a plurality of mass storage devices (30) at least one of which includes first and second ports (10), a plurity of controllers (20) and means coupling the ports of said mass storage devices to various ones of said controllers and in which, each mass storage device can only be on-line though one port at a time, said method being characterized by comprising the steps:

a. sending from the on-line port of each mass storage device to a first controller to which it is coupled device state information;

b. sending a predetermined command (TOPOLOGY; Fig. 45) from said first controller to said on-line port;

c. at said mass storage device responding to said predetermined command by discontinuing the sending of device state information from said on-line port to said first controller, and sending a signal available state from the other port to a second controller while maintaining the actual state of said mass storage device unchanged.

9. The method according to claim 8 and further including sending commands from the second controller to said mass storage device requesting information concerning the status and characteristics of said mass storage device and responding to said request at said mass storage device by returning said requested information to said second controller.

10. The method according to claim 9 and further including sending a disconnect command from said second controller to said mass storage device when said interrogation is completed: and in response to said disconnect command restoring said mass storage device to its initial state.

11. The method according to claim 10 and further including, upon receipt of said predetermined command, setting a timer at said mass storage device, and upon expiration of said timer, if a disconnect command has not been previously received, restoring said mass storage device to its initial condition.

12. Apparatus for permitting a controller (20) to interrogate a mass storage device (30) having first and second ports capable of accepting first and second radial cables from first and second controllers (20) respectively, said mass storage device capable of being on-line through only one of said ports at a time, and the controller to which the other port is connected is to be permitted to obtain status and characteristics from said mass storage device, characterized in that the system furter comprises:

means responsive to a predetermined command (TOPOLOGY: Fig. 45) received at said main storage device through said on-line port (10) to disable said on-line port and enable said other port while leaving the actual state of said mass storage device (30) relative to said on-line port (10) unchanged;

means for sending a predetermined signal from said main storage device out through said other port after said on-line port has been disabled; and

means responsive to further commands received at said main storage device through said other port to provide outputs through said other port indicative of the characteristics and status of said mass storage device.

13. Apparatus according to claim 12 which further includes a first controller coupled to said first port and a second controller coupled to said second port.

14. Apparatus according to one of claims 12 or 13 which further includes means for interrogating said mass storage device from said second controller to determine its characteristics and status; means for sending a disconnect command to said mass storage device upon completion of said interrogation; and means at said mass storage device for responding to said disconnect command by restoring its connection to said first controller and terminating its connection to said second controller.

15. Apparatus according to one of claims 12 to 14 which further includes means for setting a timer at said mass storage device upon receipt of said predetermined command, and means for restoring said mass storage device to its initial condition upon expiration of said timer if a disconnect command has not been previously received.

**Patentansprüche**

1. Verfahren, das dem Host-Computer eines Datenverarbeitungssystems ermöglicht, alle möglichen Zugruffswege zwischen einer Vielzahl von Massenspeichereinrichtungen (30) und einer Vielzahl von Controllern (20) zu bestimmen, wobei mindestens eine der Massenspeichereinrichtungen mit mehreren Controllern und mindestens einer der Controller mit mehreren Massenspeichereinrichtungen verbunden sind und wobei die Befehls- und Statusinformation zwischen den Controllern und den Massenspeichereinrichtungen ausgetauscht wird, wobei das Verfahren gekennzeichnet, ist durch die Verfahrensschritte:

A. jede Massenspeichereinrichtung sendet über einen ersten Massenspeicheranschluß einem ersten Controller eine Einrichtungs-Statusinformation;

B. der Host-Computer sendet an jeden Controller ein bestimmtes Befehlssignal zur Bestimmung aller Zugriffswege; und

C. jeder Controller sendet, in Abhängigkeit von dem bestimmten Befehlssignal, jeder Massenspeichereinrichtung, mit der er kommunizieren kann, ein vorbestimmtes Befehlfssignal (TOPOLOGY; Fig. 45), wodurch die Massenspeichereinrichtung aufhört, über den ersten Anschluß eine Statusinformation zu senden und wodurch außerdem bewirkt wird, daß die Massenspeichereinrichtung ggf. über alle ihre anderen Anschlüsse eine Statusinformation der Reihe nach an die Controller sendet, die mit diesen anderen Anschlüssen kommunizieren können, während der aktuelle Status der Massenspeichereinrichtung bezüglich aller verfügbaren Controller unverändert bleibt.

2. Verfahren nach Anspruch 1, wobei die von einer Massenspeichereinrichtung an einen Controller gesendete Statusinformation eine Information bezüglich der logischen Kenndaten der Massenspeichereinrichtung umfaßt.

3. Verfahren nach Anspruch 1, wobei die von einer Massenspeichereinrichtung an einen Controller gesendete Statusinformation eine Information bezüglich der physikalischen Kenndaten der Massenspeichereinrichtung umfaßt.

4. Verfahren, das einem Controller (20) ermöglicht, eine Massenspeichereinrichtung (30) mit einem ersten und zweiten Anschluß zur Verbindung mit einem derartigen ersten bzw. zweiten Controller (20) abzufragen, wobei die Massenspeichereinrichtung lediglich über einen dieser Anschlüsse zur gleichen Zeit on-line-fähig ist und der Controller, mit dem der andere Anschluß verbunden ist, die Massenspeichereinrichtung abfragen kann, wobei das Verfahren gekennzeichnet ist durch die Verfahrensschritte:

die Massenspeichereinrichtung

—deaktiviert entsprechend einem vorbestimmten Befehl (TOPOLOGY, Fig. 45), der an der Massenspeichereinrichtung über den on-line-Anchluß empfangen wird, den on-line-Anschluß und aktiviert den anderen Anschluß, während der aktuelle Status der Massenspeichereinrichtung bezüglich des on-line-Anschlusses unverändert bleibt;

—sendet über den anderen Anschluß ein vorbestimmtes Signal, nachdem der on-line-Anschluß deaktiviert wurde; und

—gibt entsprechend weiteren Befehlen, die über den anderen Anschluß empfangen werden, über den anderen Anschluß Ausgangssignale ab, die den Status und die Kenndaten der Massenspeichereinrichtung angeben.

5. Verfahren nach Anspruch 4, wobei die ersten und zweiten Controller jeweils mit dem ersten bzw. zweiten Anschluß verbunden sind und das Verfahren weiterhin den Verfahrensschritt des Sendens des vorbestimmten Befehls vom ersten Controller und des Sendens der weiterhin Befehlle vom zweiten Controller aufweist.

6. Verfahren nach Anspruch 5, bei dem zudem vom zweiten Controller zur Massenspeichereinrichtung ein Unterbrechungsbefehl gesendet wird und die Massenspeichereinrichtung in Abhängigkeit von diesem Unterbrechungsbefehl den on-line-Anschluß aktiviert, den anderen Anschluß deaktiviert und das Senden der Statusinformation über den on-line-Anschluß in der gleichen Weise weider aufnimtt, als vor dem ersten vorbestimmten Befehl.

7. Verfahren nach Anspruch 6, bei dem zudem nach Empfang des ersten vorbestimmten Befehls ein Zeitgeber bei der Massenspeichereinrichtung gesetzt wird und nach Ablauf des Zeitgebers die Massenspeichereinrichtung weider in ihren Anfangszustand zurückgesetzt wird, wenn vorher nicht ein Unterbrechungsbefehl empfangen wurde.

8. Verfahren, das die Bestimmung der Topologie eines Datenverarbeitungssystems mit einer Vielzahl von Massenspeichereinrichtungen (30), von denen mindestens eine einen ersten und zweiten Anschluß (10) aufweist, einer Vielzahl von Controllern (20) und Einrichtungen ermöglicht, die die Anschlüsse der Massenspeichereinrichtungen mit verschiedenen Controllern verbinden, und bei dem jede Massenspeichereinrichtung gleichzeitig nur über einen Anschluß onl-line-fähig ist,

wobei diese Verfahren gekennzeichnet, ist durch die Verfahrensschritte:

a. Senden der Einrichtungs-Statusinformation von dem on-line-Anschluß einer jeden Massenspeichereinrichtung zu einem damit verbundenen ersten Controller;

b. Senden eines vorbestimmten Befehls (TOPOLOGY; Fig. 45) vom ersten Controller zu dem on-line-Anschluß;

c. Unterbrechen des Sendens der Einrichtungs-Statusinformation bei der Massenspeichereinrichtung vom on-line-Anschluß zum ersten Controller, in Abhängigkeit von dem vorbestimmten Befehl, und Senden eines Verfügbarkeitsstatus-Signals vom anderen Anschluß zu einem zweiten Controller, während der aktuelle Status der Massenspeichereinrichtung unverändert bleibt.

9. Verfahren nach Anspruch 8, bei dem weiterhin Befehle vom zweiten Controller zur Massenspeichereinrichtung gesendet werden, die die informationen bezüglich des Status und der Kenndaten der Massenspeichereinrichtung abfragen, und entsprechend der Abfrage bei der Massenspeichereinrichtung die abgefrafte Information an den zweiten Controller zurückgegeben wird.

10. Verfahren nach Anspruch 9, bei dem weiterhin ein Unterbrechungsbefehl von zweiten Controller zur Massenspeichereinrichtung gesendet wird, wenn die Abfrage beendet ist, und bei der in Abhängigkeit von diesem Unterbrechungsbefehl die Massenspeichereinrichtung in ihren Anfangsstatus zurückgesetzt wird.

11. Verfahren nach Anspruch 10, bei dem, nach Empfang des vorbestimmten Befehls, ein Zeitgeber bei der Massenspeichereinrichtung gesetzt wird und nach Ablauf des Zeitgebers, die Massemspeichereinrichtung in ihren Anfangszustand zurückgesetzt wird, wenn vorher nicht ein Unterbrechungsbefehl empfangen wurde.

12. Vorrichtung, die einem Controller (20) ermöglicht, eine Massenspeichereinrichtung (30) mit ersten und zweiten Anschlüssen abzufragen, die erste und zweite radiale Verbindungen von ersten bzw. zweiten Controllern (20) aufnehmen können, wobei die Massenspeichereinrichtung gleichzeitig nur über einen der Anschlüsse on-line-fähig ist und der Controller, mit dem der andere Anschluß verbunden ist, den Status und die Kenndaten von der Massenspeichereinrichtung erhalten kann, dadurch gekennzeichnet, daß das System weiterhin aufweist:

eine auf einen vorbestimmten Befehl (TOPOLOGY; Fig. 45) der bei der Massenspeichereinrichtung über den on-line-Anschluß (10) empfangen wird, ansprechende Einrichtung zur Deaktivierung des on-line-Anschlusses und Aktivierung des anderen Anschlusses, während der aktuelle Status der Massenspeichereinrichtung (30) bezüglich des on-line-Anschlusses (10) unverändert bleibt;

eine Einrichtung zum Senden eines vorbestimmten Signals von der Massenspeichereinrichtung über den anderen Anschluß, nachfem der on-line-Anschluß deaktiviert wurde; und

eine auf weiter Befehle, die bei der Massenspeichereinrichtung über den anderen Anschluß empfangen werden, ansprechende Einrichtung zur Aufgabe von Ausgangssignalen über den anderen Anschluß, die die Kenndaten und den Status der Massenspeichereinrichtung anzeigen.

13. Vorrichtung nach Anspruch 12, die weiterhin einen ersten, mit dem ersten Anschluß verundenen Controller und einen zweiten, mit dem zweiten Anschluß verbundenen Controller aufweist.

14. Vorrichtung nach einem der Ansprüche 12 oder 13, die weiterhin aufweist eine Einrichtung zum Abfragen der Massenspeichereinrichtung vom zweiten Controller zur Bestimmung seiner Kenndaten und seines Status, eine Einrichtung zum Senden eines Unterbrechungsbefehls an die Massenspeichereinrichtung nach Beendigung der Abfrage und eine Einrichtung bei der Massenspeichereinrichtung, die in Abhängigkeit von dem Unterbrechungsbefehl die Verbindung mit dem ersten Controller wiederherstellt und die Verbindung mit dem zweiten Controller beendet.

15. Vorrichtung nach einem der Ansprüche 12 bis 14, die weiterhin eine Einrichtung zum Setzen eines Zeitgebers bei der Massenspeichereinrichtung nach Empfang des vorbestimmten Befehls und eine Einrichtung zum Rücksetzen der Massenspeichereinrichtung in ihren Anfangszustand nach Ablauf des Zeitgebers aufweist, wenn vorher nicht ein Unterbrechungsbefehl empfangen wurde.

**Revendications**

1. Procédé pour permettre à l'ordinateur principal d'un système de traitement des données de déterminer tous les chemins d'accès possibles entre une pluralité de périphériques (30) de mémoire de masse et une pluralité d'unités de commandes (20), étant précisé qu'au moins l'un des périphériques de mémoire de masse est relié à plusieurs desdites unités de commande et qu'au moins l'une desdites unités de commande est reliée à plusieurs desdits périphériques de mémoire de masse, et étant précisé qu'une commande et une information d'état s'échangent entre lesdites unités de commande et lesdits périphériques de mémoire de masse,

ledit procédé étant caractérisé en ce qu'il comporte les étapes consistant en ce que:

A. chaque périphérique de mémoire de masse envoie une information d'état relative au périphérique à une première unité de commande par l'intermédiaire d'un premier des ports d'accès du périphérique de mémoire de masse;

B. l'ordinateur principal envoie à chaque unité de commande un certain signal de commande pour déterminer tous ces chemins; et

C. sensible audit certain signal de commande, chaque unité de commande envoie à chaque périphérique de mémoire de masse avec lequel elle peut communiquer un signal de commande prédéterminé (TOPOLOGIE; figure 45) qui amène le périphérique de mémoire de masse à cesser l'envoi de l'information d'état par l'intermédiaire dudit premier port d'accès et amène en outre ledit périphérique de mémoire de masse à envoyer une information d'état par l'intermédiaire de chacun de ses autres pors d'accès, s'il y en a, tour à tour, à l'unité de commande prévue pour communiquer avec chacun de ces autres ports d'accès, tout en laissant inchangé l'état actuel du périphérique de mémoire de masse relatif à toutes les unités de commande accessibles.

2. Procédé selon la revendication 1, dans lequel l'information d'état envoyée par une périphérique de mémoire de masse à une unité de commande inclut l'information concernant les caractéristiques logiques du périphérique de mémoire de masse.

3. Procédé selon la revendication 1, dans lequel l'information d'état envoyée par un périphérique de mémoire de masse à une unité de commande inclut l'information concernant les caractéristiques physiques du périphérique de mémoire de masse.

4. Procédé pour permettre à une unité de commande (20) d'interroger un périphérique de mémoire de masse (30) possédant un premier et un second ports d'accès pour connexion avec une telle première et une telle seconde unités de commande (20), respectivement, ledit périphérique de mémoire de masse ne pouvant être en ligne que par l'intermédiaire d'un seul desdits ports d'accès à la fois, étant précisé que l'unité de commande à laquelle l'outre pour est connecté doit pouvoir interroger ledit périphérique de mémoire de base,

ledit procédé étant caractérisé en ce qu'il comporte les étapes consistant en ce que:

ledit périphérique de mémoire de masse

—répond à une commande prédéterminée (TOPOLOGIE, figure 45) reçue audit périphérique de mémoire de masse par l'intermédiaire dudit port d'accès en ligne pour invalider ledit port d'accès en ligne et valider l'autre port, tout en laissant inchangé l'état actuel du périphérique de mémoire de masse relatif au port d'accès en ligne;

—envoie un signal prédéterminé par l'intermédiaire dudit autre pore d'accès, après que ledit port en ligne a été invalidé; et

—répond aux autres commandes reçues par l'intermédiaire dudit autre port d'accès pour envoyer, par l'intermédiaire dudit autre por d'accès, des signaux de sortie indicatifs de l'état et des caractéristiques dudit périphérique de mémoire de masse.

5. Procédé selon la revendication 4, dans lequel la première et la second unités de commande sont respectivement connectées audit premier et audit second ports d'accès, et qui comprend en outre l'étape consistant à faire envoyer ladite commande prédéterminée par ladite première unité de commande et à faire envoyer lesdites autres commandes par ladite seconde unité de commande.

6. Procédé selon la revendication 5, et comportant en outre l'étape consistant à faire envoyer, par ladite second unité de commande, audit périphérique de mémoire de masse, une commande de déconnexion; et audit périphérique de mémoire de masse, en réponse à ladite commande de déconnexion, à valider ledit port d'accès en ligne et à invalider ledit autre port et à reprendre l'envoi de l'information d'état par l'intermédiaire dudit port en ligne de la même façon que précédemment en réponse à ladite première commande prédéterminée.

7. Procédé selon la revendication 6 et comportant en outre l'étape consistant, lors de la réception de ladite première commande prédéterminée, à prescrire une temporisation audit périphérique de mémoire de masse et, lors de l'expiration de ladite temporisation, si une commande de déconnexion n'a pas été préalablement reçue, à restaurer ledit périphérique de mémoire de masse à sa condition initiale.

8. Procédé pour permettre de déterminer la topoligie d'un système de traitement des données incluant une pluralité de périphériques de mémoire de masse (30) dont au moins l'une possède un premier et un second ports d'accès (10), une pluralité d'unités de commande (20) et des moyens pour connecter les ports d'accès desdits périphériques de mémoire de masse aux différentes dites unités de commande, et dans lequel chaque périphérique de mémoire de masse ne peut être en ligne que par l'intermédiaire d'un seul port d'accès à a fois,

ledit procédé étant caractérisé en ce qu'il comporte les étapes consistant à:

a. faire envoyer une information d'état relative à un périphérique, depuis le port d'accès en ligne de chaque périphérique de mémoire de masse, à une première unité de commande à laquelle il .est connecté;

b. faire envoyer une commande prédéterminée (TOPOLOGIE; figure 45), par ladite première unité de commande, audit port d'accès en ligne;

c. faire répondre par ledit périphérique de mémoire de masse à ladite commande prédéterminée en arrêtant l'envoi de l'information d'état relative au périphérique, par ledit port d'accès en ligne, à ladite première unité de commande, et faire envoyer un signal "available/disponible", par l'autre port d'accès, à une seconde unité de commande, tout en laissant inchangé l'état actuel dudit périphérique de mémoire de masse.

9. Procédé selon la revendication 8, et comportant en outre le fait de faire envoyer, par la seconde unité de commande, audit périphérique de mémoire de masse, des commandes demandant une information concernant l'état et les caractéristiques dudit périphérique de mémoire de masse et le fait de faire répondre à ladite demande, par ledit dispositif de mémoire de masse, en renvoyant à ladite seconde unité de commande ladite information demandée.

10. Procédé selon la revendication 9 et comportant en outre le fait de faire envoyer, par ladite seconde unité de commande, audit périphérique de mémoir de masse, une commande de déconnexion lorsque ladite interrogation est achevée; et, en réponse à ladite commande de déconnexion, le fait de restaurer ledit périphérique de mémoire de masse à son état initial.

11. Procédé selon la revendication 10, et comportant en outre, lors de la réception de ladite commande prédéterminée, le fait de prescrire une temporisation dans ledit périphérique de mémoire de masse, et, lors de l'expiration de ladite temporisation, si une commande de déconnexion n'a pas été préalablement reçue, le fait de restaurer ledit périphérique de mémoire de masse à sa condition initiale.

12. Appareil pour permettre à une unité de commande (20) d'interroger un dispositif de mémoire de masse (30) possèdant un premier et un second ports d'accès capables de recevoir un premier et un second bus à distribution radiale, en provenance d'une première et d'un seconde unités de commande (20) respectivement, ledit dispositif de mémoire de masse ne pouvant être en ligne que par l'intermédiaire d'un seul desdits orifices d'accès à la fois, l'unité de commande à laquelle l'autre port d'accès est connecté devant pouvoir obtenir, de la part dudit périphérique de mémoire de masse, l'information d'état et les caractéristiques,

caractérisé en ce que le système comporte en outre:

des moyens sensibles à une commande prédéterminée (TOPOLOGIE; figure 45), reçue audit périphérique de mémoire de masse, par l'intermédiaire dudit port d'accès en ligne (10), pour invalider ledit port d'accès en ligne et valider ledit autre port, tout en laissant inchangé l'état actuel dudit périphérique de mémoire de masse (30) relatif audit port d'accès en ligne (10);

des moyens pour faire envoyer un signal prédéterminé, par ledit périphérique de mémoire de masse et par l'intermédiaire dudit autre port d'accès, après que ledit port d'accès en ligne a été invalide; et

des moyens sensibles à d'autres commandes reçues audit périphérique de mémoire de masse, par l'intermèdiaire dudit autre port d'accès, pour envoyer, par l'intermédiaire dudit autre port d'accès, des signaux de sortie indicatifs des caractéristiques et de l'état dudit périphérique de mémoire de masse.

13. Appareil selon la revendication 12 comportant en outre, une première unité de commande connectée audit premier port d'accès et une seconde unité de commande connectée audit second port d'accès.

14. Appareil selon l'une quelconque des revendications 12 ou 13, comportant en outre des moyens pour faire interroger, par ladite seconde unité de commande, ledit périphérique de mémoire de masse pour déterminer ses caractéristiques et son état; des moyens pour faire envoyer une commande de déconnexion audit périphérique de mémoire de masse lors de l'achèvement de ladite interrogation; et des moyens dans ledit périphérique de mémoire de masse pour répondre à ladite commande de déconnexion en restaurant la connexion à ladite première unité de commande et en mettant fin à sa connexion avec ladite second unité de commande.

15. Appareil selon l'une quelconque des revendications 12 à 14, comportant en outre des moyens pour prescrire, audit périphérique de mémoire de masse, une temporisation lors de la réception de ladite commande prédéterminée, et des moyens pour restaurer ledit périphérique de mémoire de masse à sa condition initiale, lors de l'expiration de ladite temporisation si une demande de déconnexion n'a pas été préalablement reçue.

Fig. 1

Fig. 3

1

| CHANNEL | DRIVE STATE RELATIVE TO CONTROLLER | | | |
|---|---|---|---|---|
| | DRIVE-OFFLINE | DRIVE-UNAVAILABLE (DRIVE-ONLINE TO OTHER PORT) | DRIVE-AVAILABLE | DRIVE-ONLINE |
| READ/RES DATA | OFF | OFF | ZEROES OR DATA OR OFF | ZEROES OR DATA OR OFF |
| REAL-TIME DRIVE STATE | CLOCK | STATE BYTE AND CLOCK AS SENT TO ON-LINE DRIVE | STATE BYTE AND CLOCK | STATE BYTE AND CLOCK OR OFF |

*Fig. 2*

EP 0 163 882 B1

—TIME—

66 68
64
62
72 74 76

—REPEATED 16 BIT PATTERN—

| Ø | Ø | Ø | Ø | Ø | Ø | Ø | Ø | 1 | | | | | | P | | |

60 →

60A    60B

PREAMBLE (8 "Ø"S)
SYNCH ("1")
RECEIVER READY
ATTENTION
READ/WRITE READY
SECTOR PULSE
INDEX PULSE
AVAILABLE
PARITY

*Fig. 4*

Fig. 5

*Fig. 6*

EP 0 163 882 B1

32 BIT EXCHANGE

|← 16 BITS →|

|← 16 BITS →|

MSB

LSB

/154

/152

| CONTROL FRAME |

| Ø | Ø | 1ØØ11Ø1Ø1111 | Ø | Ø |

SYNCH CHARACTER

*Fig. 7*

MESSAGE START:

*Fig. 8A*

MSB  162  164  LSB

| Ø111 ØØØ1 | MESSAGE DATA | ← 161

MESSAGE CONTINUATION:

*Fig. 8B*

166  168

| 11Ø1 Ø1ØØ | MESSAGE DATA | ← 165

MESSAGE END:

*Fig. 8C*

172  174

| 1Ø11 ØØ1Ø | CHECKSUM | ← 171

SELECT GROUP:

*Fig. 8D*

176  178

| 1ØØØ 111Ø | GROUP NUMBER | ← 175

SELECT TRACK AND READ:

*Fig. 8E*

182  184

| ØØØ1 Ø111 | TRACK NUMBER | ← 181

SELECT TRACK AND WRITE:

*Fig. 8F*

186  188

| 1Ø1Ø Ø1Ø1 | TRACK NUMBER | ← 185

SELECT TRACK AND FORMAT ON INDEX:

*Fig. 8G*

192  194

| ØØ1Ø 1Ø11 | TRACK NUMBER | ← 191

FORMAT ON SECTOR OR INDEX:

*Fig. 8H*

196  198

| Ø1ØØ 11Ø1 | UNDEFINED | ← 195

DIAGNOSTIC ECHO:

*Fig. 8I*

202  204

| 111Ø 1ØØØ | UNDEFINED | ← 201

7

Fig. 9

Fig. 10A

EP 0 163 882 B1

Fig. 10B

EP 0 163 882 B1

Fig. 10C

**Fig. 11**

12

*Fig. 12*

MSB                  LSB

| OPCODE | ~402 |
| PARAMETER 1 | ~404a |
| PARAMETER 2 | ~404b |

• • •

| PARAMETER n | ~404n |

*Fig. 13*

MSB                  LSB

| 1 | 0 | 0 | 0 | 0 | 0 | 0 | 1 | ~402 |
| W4 | W3 | W2 | W1 | DD | FO | DB | S7 | ~404a |
| BIT MASK | | | | | | | | ~404b |

*Fig. 20*

14

Fig. 14

EP 0 163 882 B1

15

*Fig. 15*

*Fig. 16*

ENTER FROM
L1 RECEIVE

EVEN
PARITY
OPCODE? —N→

Y

VALID
OPCODE? —N→

Y

CORRECT
NUMBER OF
MESSAGE
BYTES? —N→

Y

OA
SET? —Y→

VALID
COMMAND
DURING
OA? —N→

Y

N

ERROR
BYTE NON-
ZERO? —N→

VALID
COMMAND
WITH ERROR BYTE
NONZERO? —N→

Y

Y

DISPATCH TO
L2 COMMAND
ROUTINE

SET "PE"
ERROR

SEND
UNSUCCESSFUL
RESPONSE

EXIT

17

Fig. 17

```
          ┌──────────────┐
          │   CHANGE     │
          │ MODE COMMAND │
          └──────────────┘
                 │
                 ▼
    ┌────────────────────────────┐
    │  DETERMINE                 │
    │  MODE SETTINGS;            │
    │  1)512/576 BYTE            │
    │     SECTOR                 │
    │  2)DIAG. CYL ACCESS        │
    │  3)DRIVE DISABLED          │
    │  4)FORMATTING              │
    │     ENABLED                │
    │  5)SUBUNIT WRITE           │
    │     PROTECT                │
    │  CREATE MASK.              │
    │  STORE IN COMMAND          │
    │  BUFFER                    │
    └────────────────────────────┘
                 │
                 ▼
       ┌──────────────────┐
       │  CALL PERFORM    │
       │  LEVEL TWO       │
       │  COMMAND         │
       └──────────────────┘
                 │
                 ▼
            ◇ SUCCESS? ◇ ──N──►  ┌──────────────┐
                 │               │ CHANGE MODE  │
                 Y               │  FAILURE     │
                 │               └──────────────┘
                 ▼
          ┌──────────────┐
          │ CHANGE MODE  │
          │  COMPLETE    │
          └──────────────┘
```

*Fig. 18*

Fig. 19

Flowchart:

ENTER FROM L2 DISPATCH ROUTINE

↓

WRITE PROTECT MASK BIT SET? — Y → CHANGE SUBUNIT'S WRITE PROTECT ACCORDING TO THE WRITE PROTECT BIT

N ↓

S7 MASK BIT SET? — Y → SET "S7" BIT ACCORDING TO ARGUMENT AND SET SECTOR SIZE ACCORDINGLY

N ↓

FO MASK BIT SET? — Y → SET "FO" AND FORMAT ENABLE ACCORDING TO ARGUMENT

N ↓

DB MASK BIT SET? — Y → SET "DB" ACCORDING TO THE ARGUMENT

N ↓

DD MASK BIT SET? — Y → SET "DD" ACCORDING TO THE ARGUMENT

N ↓

SEND COMPLETED RESPONSE → EXIT

CHANGE FLAGS
COMMAND

DETERMINE FLAG SETTINGS;
1) C1→C4 - CONTROLLER
   FLAGS
2) S1→S4 - SUBUNIT.
   SUPRESS AVAILABLE
   ATTENTION MSGS
CREATE MASK. STORE
IN COMMAND BUFFER

CALL PERFORM
LEVEL TWO
COMMAND

SUCCESS?

N → CHANGE FLAGS
FAILURE

Y

CHANGE FLAGS
COMPLETE

*Fig. 21*

*Fig. 25*

*Fig. 22*

MSB                    LSB

| 1 | 0 | 0 | 0 | 0 | 0 | 1 | 0 | ~402 |
|---|---|---|---|---|---|---|---|---|
| S4 | S3 | S2 | S1 | C1 | C2 | C3 | C4 | ~404a |
| BIT MASK | | | | | | | | ~404b |

*Fig. 23*

MSB                    LSB

| 1 | 0 | 0 | 0 | 0 | 1 | 0 | 0 | ~402 |
|---|---|---|---|---|---|---|---|---|
| TT | RESERVED | | | | | | ST | ~404 |

*Fig. 26*

MSB                    LSB

| 0 | 0 | 0 | 0 | 0 | 1 | 1 | 0 | ~402 |
|---|---|---|---|---|---|---|---|---|
| LF VEL | | | | | | | | ~404 |

*Fig. 29*

Fig. 24

24

Fig. 27

MSB                                    LSB

| 1 | 0 | 0 | 0 | 0 | 1 | 1 | 1 | —402 |

Fig. 30

MSB                                    LSB

| 1 | 0 | 0 | 0 | 1 | 0 | 0 | 0 | —402 |
| SUBUNIT MASK | | | | RESERVED | | | | —404 |

Fig. 34

26

*Fig. 31*

*Fig. 35*

EP 0 163 882 B1

**Fig. 28**

```
   ENTER FROM
   L2 DISPATCH
     ROUTINE
        │
        ▼
      ERROR
    RECOVERY      ──Y──┐
    LEVEL=0?           │
        │N             │
        ▼              │
      VALID            │
  ERROR RECOVERY ──N──▶  SET "PE" ERROR
     LEVEL?            │       │
        │Y             │       ▼
        ▼              │     SEND
    PERFORM            │  UNSUCCESSFUL
 ERROR RECOVERY ◀──────┘    RESPONSE
 LEVEL PROCEDURE           │
        │                  ▼
        ▼                 EXIT
      SEND
    COMPLETED
    RESPONSE
        │
        ▼
       EXIT
```

**Fig. 36**

```
   ENTER FROM
   L2 DISPATCH
     ROUTINE
        │
        ▼
      VALID
     SUBUNIT    ──N──▶  SET "PE" ERROR
      MASK?               │
        │Y                ▼
        ▼              SEND
      SEND          UNSUCCESSFUL
    "SUBUNIT          RESPONSE
 CHARACTERISTICS"      │
    RESPONSE           ▼
        │             EXIT
        ▼
       EXIT
```

**Fig. 32**

```
   ENTER FROM
   L2 DISPATCH
     ROUTINE
        │
        ▼
      SEND
    "COMMON
 CHARACTERISTICS"
    RESPONSE
        │
        ▼
       EXIT
```

29

MSB                                    LSB

| 0 | 1 | 1 | 1 | 1 | 0 | 0 | 0 | —502 |

*Fig. 33*

504b

504→ | PROT. VERS. | SHORT T.O. | —504a

TRANSFER RATE —506

508→ | RETRIES | LONG T.O. | —508a
508b

510c
510b → | SS | RSVD | F/RCT COPIES | —510a / 510

ERROR RECOVERY LEVELS —512

ECC THRESHOLD —514

MICROCODE REV. NUMBER —516

518→ | FD | HARDWARE REV. NUMBER | —518a

UNIQUE DRIVE ID (LO) —520

UNIQUE DRIVE ID —522

UNIQUE DRIVE ID —524

UNIQUE DRIVE ID —526

UNIQUE DRIVE ID —528

UNIQUE DRIVE ID (HI) —530

DRIVE TYPE IDENTIFIER —532

REVS/SECOND —534

536— TBS

538— TBS

540— TBS

542— TBS

544— TBS

546— TBS

ERROR
THRESHOLDS

30

## Fig. 37A

MSB                     LSB

| 0 | 1 | 1 | 1 | 0 | 1 | 1 | 1 | ~ 602 |

| LBN SPACE IN CYL (LO) | ~ 604 |
| LBN SPACE IN CYL | ~ 606 |
| LBN SPACE IN CYL | ~ 608 |

610 →
610c
610b

| 0 | HI CYL # | LBN CYLS(HI) | ~610a |
| GROUPS/CYLINDER | ~612 |

614
614b

| HI STRT XBN | HI STRT LBN | ~614a |
| TRACKS/GROUP | ~616 |

618b

| HI STRT DBN | HI STRT RBN | ~618 / ~618a |
| RM | RBN'S/TRACK | ~620 |
| RESERVED | ~622 |
| DATA PREAMBLE (WORDS) | ~624 |
| HEADER PREAMBLE (WORDS) | ~626 |
| LOW ORDER MEDIA TYPE | ~628 |
| MEDIA TYPE | ~630 |
| MEDIA TYPE | ~632 |
| HI ORDER MEDIA TYPE | ~634 |
| FCT COPY SIZE-XBN'S (LO) | ~636 |
| FCT COPY SIZE-XBN'S (HI) | ~638 |

31

MSB                                    LSB

640 — LBN'S / TRACK

642 — GROUP OFFSET

644 — LBN'S IN HOST AREA (LO)

646 — LBN'S IN HOST AREA

648 — LBN'S IN HOST AREA

650 — 0 | 0 | 0 | 0 |                    — LBN'S IN HOST AREA (HI)

652 — RCT CPY SIZE-LBN'S (LO)

654 — RCT CPY SIZE-LBN'S (HI)

512 BYTE FORMAT

656 — LBN'S / TRACK

658 — GROUP OFFSET

660 — LBN'S IN HOST AREA (LO)

662 — LBN'S IN HOST AREA

664 — LBN'S IN HOST AREA

666 — 0 | 0 | 0 | 0 |                    — LBN'S IN HOST AREA (HI)

668 — RCT CPY SIZE-LBN'S (LO)

670 — RCT CPY SIZE-LBN'S (HI)

672 — XBN SPACE IN CYL (LO)

674 — XBN SPACE IN CYL (HI)

676 —                                   — SIZE OF DIAGNOSTIC READ AREA (GROUPS)

678 — DBN SPACE IN CYL

576 BYTE FORMAT

*Fig. 37B*

32

Fig. 39

Fig. 38

Fig. 41

Fig. 44

Fig. 40

MSB                                          LSB

| 1 | 0 | 0 | 0 | 1 | 0 | 1 | 1 | ←402 |

| COMMAND TIMEOUT (SECS) | ←404 |

*Fig. 42*

MSB                                          LSB

| 1 | 0 | 0 | 1 | 0 | 0 | 0 | 0 | ←402 |

*Fig. 45*

ONLINE
COMMAND

PLACE ONLINE
COMMAND CONTROLLER
TIMEOUT IN
COMMAND BUFFER

CALL PERFORM
LEVEL TWO
COMMAND

SUCCESS? —N→ ONLINE
FAILURE

Y

ONLINE
SUCCESS

*Fig. 43*

Fig. 47

*Fig. 46*

MSB                 LSB

| 0 | 1 | 1 | 0 | 1 | 1 | 1 | 1 | —752 |

STATUS SUMMARY —754a

750 →

LAST BYTE OF STATUS —754n

*Fig. 48*

MSB                 LSB

756 →

| 0 | 1 | 1 | 1 | 1 | 1 | 1 | 0 |

*Fig. 49*

MSB                 LSB

| 0 | 1 | 1 | 1 | 1 | 1 | 0 | 1 | —760 |

STATUS SUMMARY —762(1)

758 →

LAST BYTE OF STATUS —762(14)

*Fig. 50*